(19) Europäisches Patentamt

European Patent Office

Office européen des brevets

(11) **EP 0 797 125 B1**

(12) **EUROPEAN PATENT SPECIFICATION**

(45) Date of publication and mention of the grant of the patent:
**06.11.2002 Bulletin 2002/45**

(51) Int Cl.⁷: **G03G 15/00**, G03G 21/18

(21) Application number: **97301926.8**

(22) Date of filing: **21.03.1997**

(54) **Process cartridge and electrophotographic image forming apparatus**

Prozesskartusche und elektrofotografisches Bilderzeugungsgerät

Cartouche de traitement et appareil électrophotographique de formation

(84) Designated Contracting States:
**CH DE FR GB IT LI**

(30) Priority: **21.03.1996 JP 6410596**
**26.09.1996 JP 27752896**
**27.03.1996 EP 96302138**

(43) Date of publication of application:
**24.09.1997 Bulletin 1997/39**

(73) Proprietor: **CANON KABUSHIKI KAISHA**
**Tokyo (JP)**

(72) Inventors:
• **Watanabe, Kazushi**
**Ohta-ku, Tokyo (JP)**
• **Ito, Yoshihiro**
**Ohta-ku, Tokyo (JP)**
• **Kawai, Toshiharu**
**Ohta-ku, Tokyo (JP)**

(74) Representative:
**Beresford, Keith Denis Lewis et al**
**BERESFORD & Co.**
**2-5 Warwick Court,**
**High Holborn**
**London WC1R 5DH (GB)**

(56) References cited:
| | |
|---|---|
| EP-A- 0 251 693 | EP-A- 0 735 432 |
| GB-A- 2 214 609 | US-A- 3 213 719 |
| US-A- 4 454 922 | US-A- 4 975 743 |
| US-A- 5 019 861 | US-A- 5 280 224 |
| US-A- 5 452 064 | |

**Description**

FIELD OF THE INVENTION AND RELATED ART

The present invention relates to a process cartridge and an electrophotographic image forming apparatus. Here, the electrophotographic image forming apparatus means an apparatus using an electrophotographic image formation type process to form an image on a recording medium. Examples of the electrophotographic image forming apparatus include electrophotographic copying machine, electrophotographic printer (laser beam printer, LED printer or the like), facsimile device and word processor.

Here, the process cartridge may be a cartridge which is detachably mountable to a main assembly of an image forming apparatus and which contains as an unit an electrophotographic photosensitive member and at least one one of process means such as charging means, developing means, cleaning means or the like. The process cartridge may be a cartridge which is detachably mountable to a main assembly of an image forming apparatus and which contains as an unit an electrophotographic photosensitive member and a process means such as charging means, developing means, cleaning means or the like. The process cartridge may be a cartridge which is detachably mountable to a main assembly of an image forming apparatus by user and which contains as an unit an electrophotographic photosensitive member and developing means. Since the process cartridge is detachably mountable relative to the main assembly of the device, the maintenance of the device is easy.

An electrophotographic image forming apparatus using the electrophotographic image formation type is such that a latent image is formed by selectively exposing the electrophotographic photosensitive member uniformly charged by charging means to image information light. The latent image is developed with toner by a developing means into a toner image. The toner image thus formed is transferred onto a recording medium by transferring means to form an image on the recording material.

When the process cartridge is mounted to the main assembly of the image forming apparatus, the process cartridge position is desirably precise.

SUMMARY OF THE INVENTION

Accordingly, it is a principal object of the present invention to provide a process cartridge and an electrophotographic image forming apparatus wherein when a process cartridge is mounted to the main assembly of the apparatus, the process cartridge can be correctly positioned to the main assembly of the apparatus.

It is another object of the present invention to provide a process cartridge and an electrophotographic image forming apparatus wherein when the process cartridge is mounted to the main assembly, the process cartridge is correctly positioned to the main assembly of the apparatus in the longitudinal direction of the photosensitive drum.

It is a further object of the present invention to provide a process cartridge and an electrophotographic image forming apparatus wherein when the process cartridge is mounted to the main assembly of the apparatus, a photosensitive dram can be rotated through a coupling.

It is a further object of the present invention to provide a process cartridge and an electrophotographic image forming apparatus wherein the position of the process cartridge relative to the main assembly of the apparatus in the longitudinal direction of the photosensitive dram is determined by the abutment between a free end surface of a projection and a bottom surface of a recess.

These and other objects, features and advantages of the present invention will become more apparent upon a consideration of the following description of the preferred embodiments of the present invention taken in conjunction with the accompanying drawings.

BRIEF DESCRIPTION OF THE DRAWINGS

Figure 1 is a cross-sectional view of an electrophotographic image forming apparatus according to an embodiment of the present invention.

Figure 2 is a cross-sectional view of a process cartridge according to an embodiment of the present invention.

Figure 3 is perspective view a process cartridge according to an embodiment of the present invention.

Figure 4 is a perspective view of a process cartridge according to an embodiment of the present invention.

Figure 5 is a perspective view of a process cartridge mounting portion of a main assembly of an electrophotographic image forming apparatus according to an embodiment of the present invention.

Figure 6 is a perspective view of a process cartridge mounting portion of a main assembly of an electrophotographic image forming apparatus according to an embodiment of the present invention.

Figure 7 is a perspective view of a drum flange (driving force transmission part) according to an embodiment of the present invention.

Figure 8 is a perspective view of a photosensitive drum according to an embodiment of the present invention.

Figure 9 is a sectional view of a process cartridge side coupling portion according to an embodiment of the present invention.

Figure 10 is a perspective view of a coupling portion of a process cartridge according to a present invention of the present invention.

Figure 11 is a sectional view of a driving system of a main assembly of an electrophotographic image forming apparatus according to an embodiment of the present invention.

Figure 12 is a sectional view of a driving system of a main assembly of an electrophotographic image forming apparatus according to an embodiment of the present invention.

Figure 13 is a perspective view of a coupling of a main assembly of the device and a coupling of the process cartridge, according to an embodiment of the present invention.

Figure 14 is a perspective view of a coupling of a main assembly of a device and a coupling of a process cartridge according to an embodiment of the present invention.

Figure 15 is a sectional view of a structure of a coupling portion and a cover of the main assembly of the device according to an embodiment of the present invention.

Figure 16 is a side view of a structure of a female coupling shaft according to an embodiment of the present invention.

Figure 17 is a side view of a structure of a female coupling shaft upon process cartridge mounting-and-demounting relative to the main assembly according to an embodiment of the present invention.

Figure 18 is a sectional view of a recess and a coupling projection according to an embodiment of the present invention.

Figure 19 is a sectional view of a coupling projection according to a one embodiment of the present invention.

Figure 20 is a sectional view of a process cartridge side coupling portion according to an embodiment of the present invention.

Figure 21 is a sectional view of an electrophotographic image forming apparatus according to an embodiment of the present invention.

Figure 22 is a perspective view of a recess and a coupling projection according to an embodiment of the present invention.

Figure 23 is a cross-sectional view and top plan view of a male shaft in the form of a twisted triangular prism provided on the process cartridge and an engageable female shaft provided in the main assembly of a device, according to an embodiment of the present invention.

Figure 24 is a perspective view of a twisted recess having a cross-section in the form of a triangle shape on the process cartridge, and a projection in the form of a complementary twisted triangular prism in the main assembly of the device, according to and embodiment of the present invention.

Figure 25 is a perspective view of a driving mechanism of the coupling of Figure 24.

Figure 26 illustrates an interrelation mechanism of a driving means and an openable cover according to an embodiment of the present invention.

Figure 27 illustrates an interrelation mechanism of driving means and an openable cover according to an embodiment of the present invention.

Figure 28 is a longitudinal sectional view of a photosensitive drum and a driving device therefor.

Figure 29 is a schematic plan view showing a positioned state of a process cartridge relative to the main assembly of the apparatus in the longitudinal direction of a photosensitive drum.

Figure 30 is a schematic plan view showing a positioned state of a process cartridge relative to the main assembly of the apparatus in the longitudinal direction of a photosensitive drum.

Figure 31 is a schematic plan view showing a positioned state of a process cartridge relative to the main assembly of the apparatus in the longitudinal direction of a photosensitive drum.

Figure 32 is a perspective view of a coupling according to another embodiment of the present invention.

DESCRIPTION OF THE PREFERRED EMBODIMENTS

Embodiments of the present invention will be described in conjunction with the accompanying drawings.

Embodiment 1

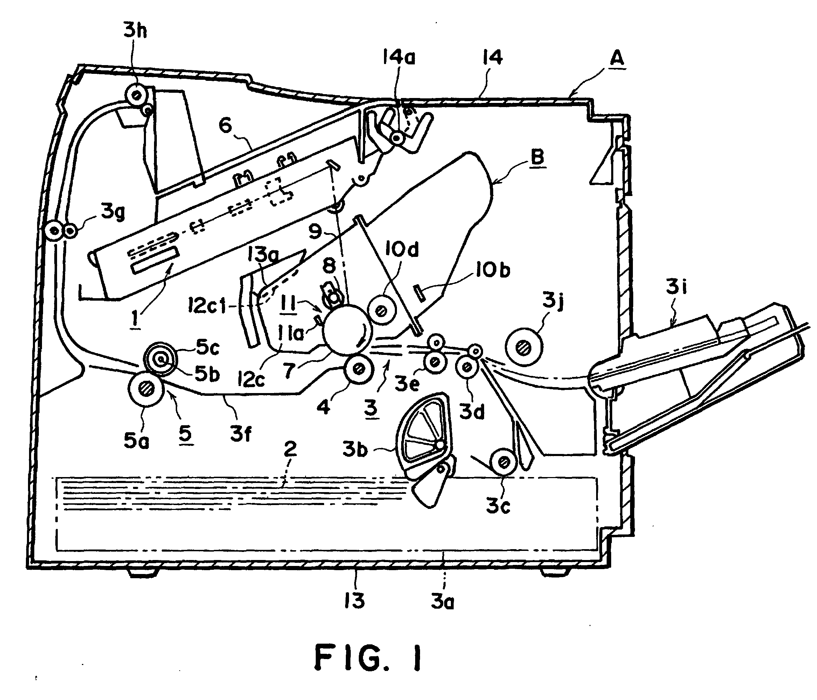

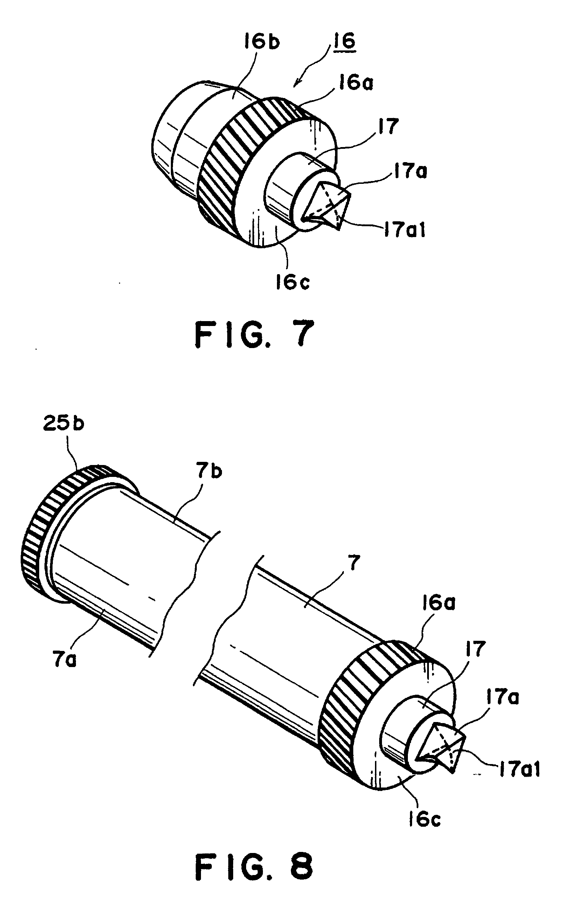

Referring to Figure 1 to Figure 10, the description will be made as to a process cartridge and an electrophotographic image forming apparatus to which it is detachably mountable according to embodiment 1. In the following description, the general arrangement of the process cartridge and the electrophotographic image forming apparatus usable therewith will be first described referring to Figure 1 to Figure 6, and then the structure of a coupling of a driving force transmission mechanism between the process cartridge and the image forming apparatus, referring to Figure 7 to Figure 10.

{General Arrangement}

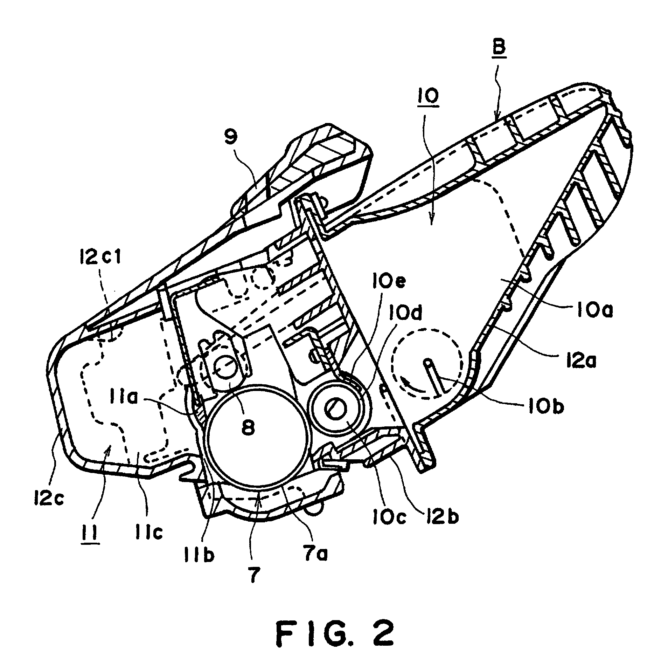

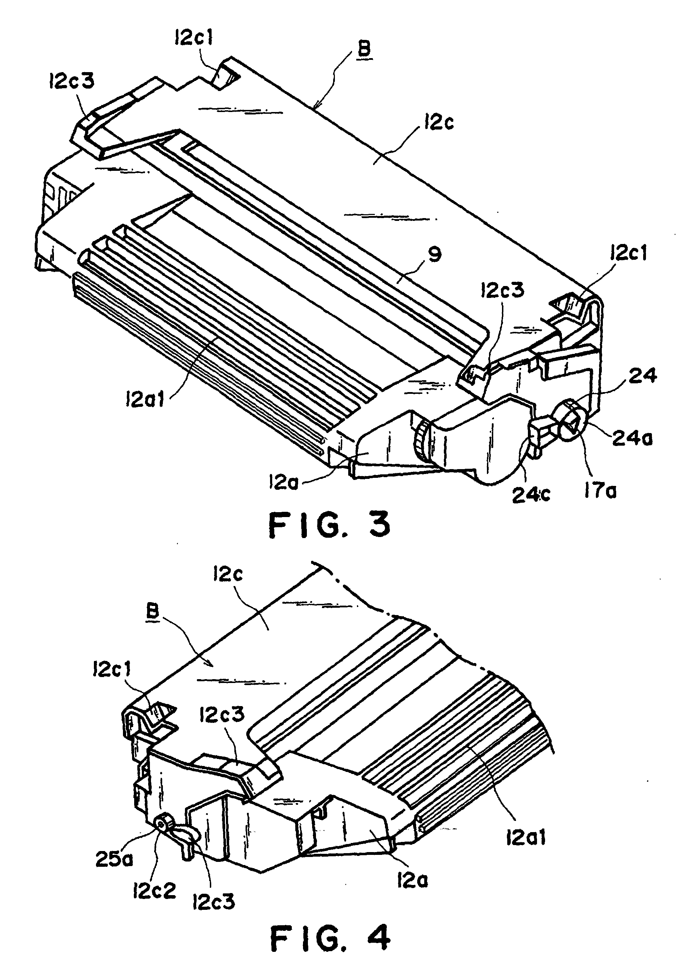

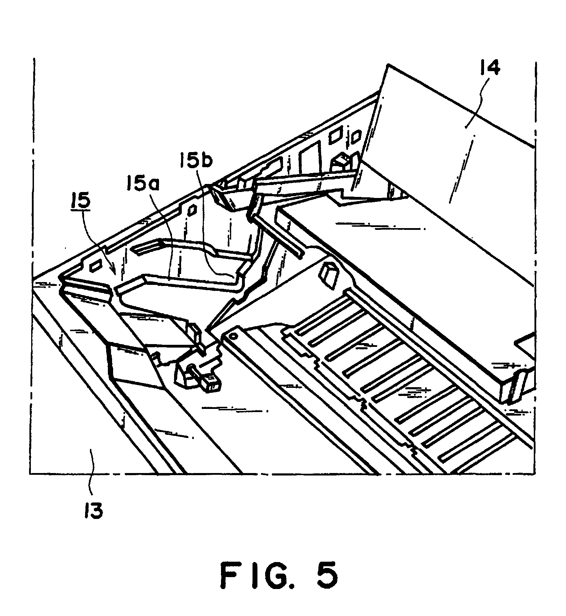

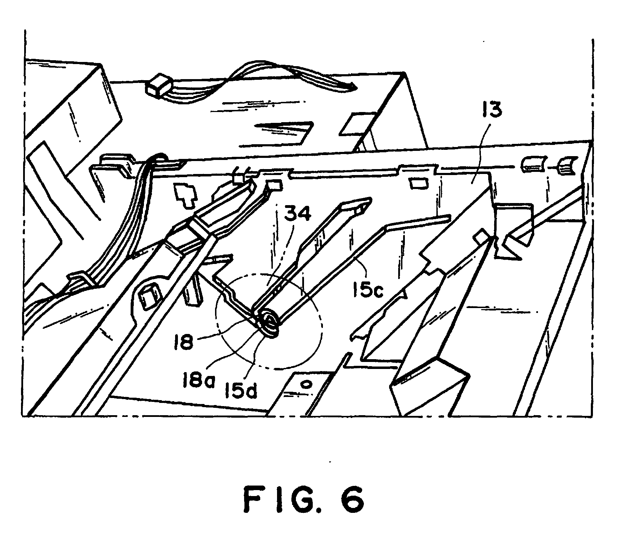

Figure 1 is a schematic view of the electrophotographic image forming apparatus A to which the process cartridge is mounted; Figure 2 is a cross-sectional view of the process cartridge B; Figure 3 and 4 are perspective views of outer appearance of the process cartridge; and Figure 5 and 6 illustrate device structures for mounting the process cartridge to the main assembly of the device.

In this electrophotographic image forming apparatus (laser beam printer in the embodiment), as shown in Figure 1, an electrophotographic photosensitive member 7 of a drum configuration is exposed to a laser beam based on an image information supplied from an optical system 1 so that a latent image is formed on the photosensitive member, and the latent image is developed with toner into a toner image. In synchronism with the formation of the toner image, a recording medium 2 (recording sheet or the like) is fed from a feeding cassette 3a by transporting means 3 comprising pick-up rollers 3b, feeding rollers 3c, feeding rollers 3d, registration rollers 3e or the like. The toner image formed on the photosensitive drum 7 is transferred onto the recording medium 2 by voltage application to the transfer roller 4 as transferring means. The recording medium 2 is guided by a guide plate 3f to a fixing means 5. The fixing means 5 comprises a fixing roller 5c comprising a driving roller 5a and a heater 5b, and applies heat and pressure to the recording medium 2 to fix the transferred toner image onto the recording medium 2. The recording medium 2 is fed by the discharging rollers 3g and 3h, and is discharged to the discharging portion 6 through a reversion feeding path. In the image forming apparatus A, a manual sheet feeding is possible using a manual feed tray and roller 3j.

The process cartridge B contains the electrophotographic photosensitive member and at least one process means. The process means includes, for example, charging means for charging the electrophotographic photosensitive member, developing means for developing the latent image on the electrophotographic photosensitive member, and cleaning means for removing the residual toner from the surface of the electrophotographic photosensitive member.

The process cartridge B of this example contains a photosensitive drum 7, the charging roller 8, the exposure opening 9, and the developing means 10, as shown. The electrophotographic photosensitive drum 7 in the process cartridge B is rotated through a coupling mechanism by the main assembly 13 of the device, as will be described hereinafter. The surface of the photosensitive drum is subjected to uniform charging by the voltage application to the charging roller 8 which is a charging means, and the information light from the optical system 1 is projected onto the photosensitive drum 7 through an exposure opening 9 to for a latent image, which is developed by the developing means 10.

In the developing means 10, the toner in a toner accommodating portion 10a is fed out by rotation of a feeding member 10b. A developing roller 10d containing a fixed magnet 10c is rotated so that a toner layer having triboelectric charge provided by a development blade 10e is formed on the surface of the developing roller 10d. The toner is transferred to the photosensitive drum 7 in accordance with the latent image to form the toner image (visualization). The toner image is transferred onto the recording medium 2 by application of the voltage of the opposite polarity from the toner image to the transfer roller 4 provided in the main assembly 13 of the device. The photosensitive drum 7 after transfer is cleaned by the cleaning means 11 so that the residual toner is removed. More particularly, the toner is scraped off by the cleaning blade 11a. The toner thus removed is collected in a residual toner container 11c by a receptor sheet 11b.

The charging roller 8 is contacted to the photosensitive drum 7 and is driven by the photosensitive drum 7. The cleaning blade 11a is contact to the photosensitive drum 7.

The process cartridge B comprises a toner frame 12a having a toner accommodating portion 10a accommodating toner and a developing frame 12b supporting a developing member such as a developing roller 10d, which frames are welded together (ultrasonic welding in this example) to form a developing unit. This developing unit is swingably coupled with a cleaning frame 12c supporting the photosensitive drum 7, the charging roller 8, the cleaning means 11 and the like. The process cartridge B is mounted to a cartridge mounting means of the main assembly 13 of the device by an user in a direction crossing with a longitudinal direction of the photosensitive drum 7 (Figures 5 and 6). The cleaning frame 12c is provided with mounting guides 12c4 adjacent a bearing 12c2. The bearing 24 (projection 24a) mounted to the cleaning frame 12c is provided with a guide 24c. the bearing 24, projection 24a and guide 24c are integrally molded. The mounting guides 24c is guided by guides 15a 15b when the process cartridge B is mounted.

As cartridge mounting means, as shown in Figure 5, cartridge mounting guiding members 15 are mounted opposed to each other on left and right sides of a cartridge mounting space of the main assembly 13 (one side in Figure 5 and the other side in Figure 6). The guiding members 15 have guide portions 15a and 15c opposed to each other to function as guides when the process cartridge B is pushed into the main assembly. The process cartridge is inserted while bosses or the like projected from opposite longitudinal ends of the cartridge frame are guided by the guide portions 15a and 15c. When the process cartridge B is to be mounted to the main assembly 13, a cover 14 which is openable about a shaft 14a is opened. By closing the openable cover 14, the process cartridge B is correctly mounting to the image forming apparatus A. When the process cartridge B is taken out from the main assembly 13, the openable cover 14 is opened.

When the process cartridge B is mounted to the image forming apparatus A, the cartridge side coupling and the main assembly side coupling are combined in interrelation with the closing operation of the openable cover 14, as will be described hereinafter, so that the photosensitive drum 7 and the like can receive the driving from the main assembly.

{Coupling and Driving Structure}

The description will be made as to the structure of the coupling means which is a driving force transmission mechanism for transmitting the driving force to the process cartridge B from the main assembly 13 of the image forming apparatus.

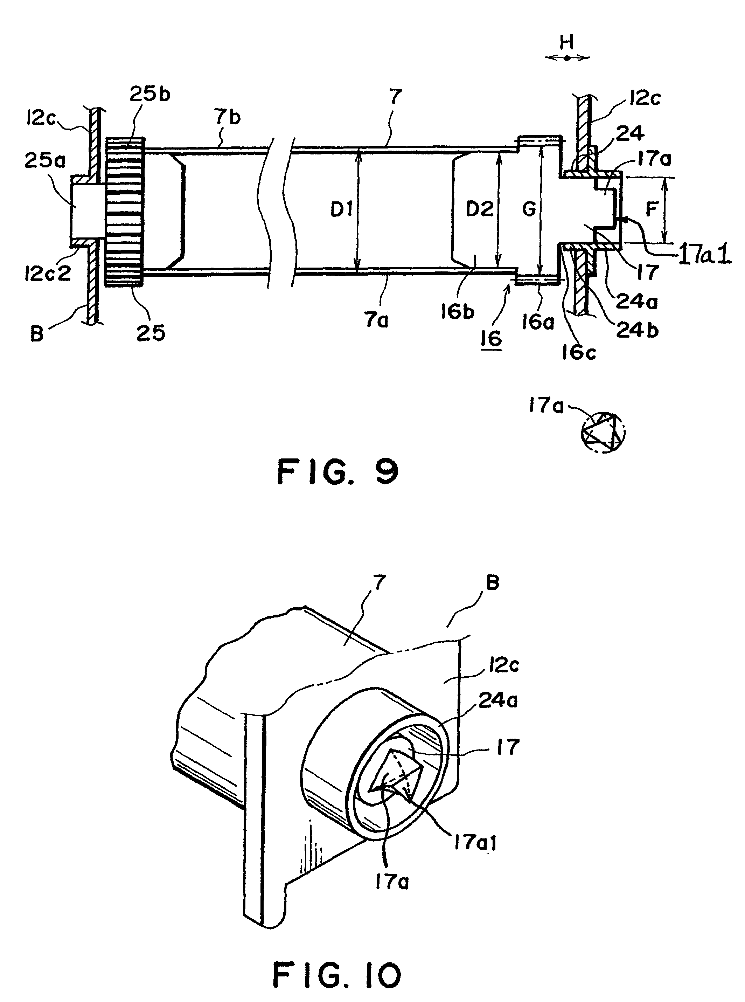

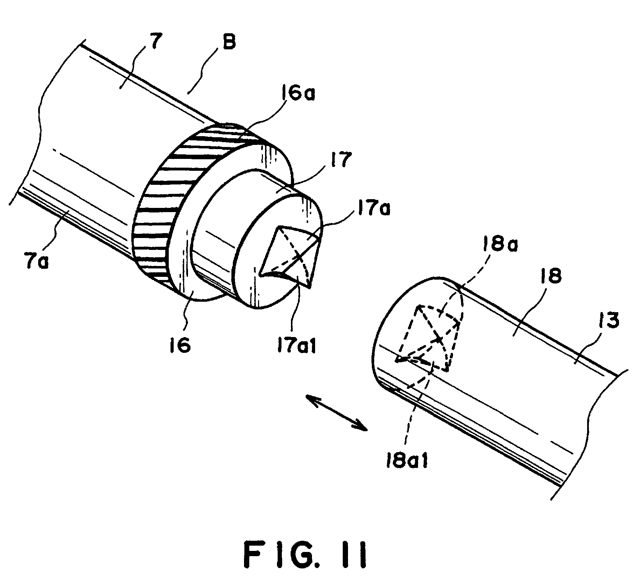

Figure 7 is a perspective view of a drum flange 16 as a driving force transmission part having an integrally formed male shaft 17; Figure 8 is a partly sectional perspective view of the photosensitive drum 7 having a drum flange 16 mounted thereto; Figure 9 is a sectional view wherein the photosensitive drum 7 is mounted to the process cartridge B; Figure 10 is an enlarged perspective view of the male shaft 17 of the process cartridge B of Figure 9; Figure 11 shows a relation between the male shaft 17 (provided to the process cartridge B) and the female shaft 18 (provided to the main assembly 13).

As shown in Figure 8 to Figure 11, there is provided a cartridge side coupling means at a longitudinal end of the photosensitive drum 7 in the process cartridge B. The coupling means has a male coupling shaft 17(circular column configuration) mounted to the drum flange 16 fixed an end of the photosensitive drum 7. Here, the end surface 17a1 of the projection 17a is parallel with the end surface of the projection shaft 17. The male shaft 17 is engaging with a bearing 24 and functions as a drum rotational shaft. In this example, the flange 16, male coupling shaft 17 and the projection 17a are integrally formed. The flange 16 is provided with a helical gear 16a for transmitting the driving force to the developing roller 10d in the process cartridge. Therefore, as shown in Figure 7, the drum flange 16 is an integrally molded member having the helical gear 16a, the male shaft 17 and the projection 17a, and is a driving force transmission part having the function of transmitting the driving force.

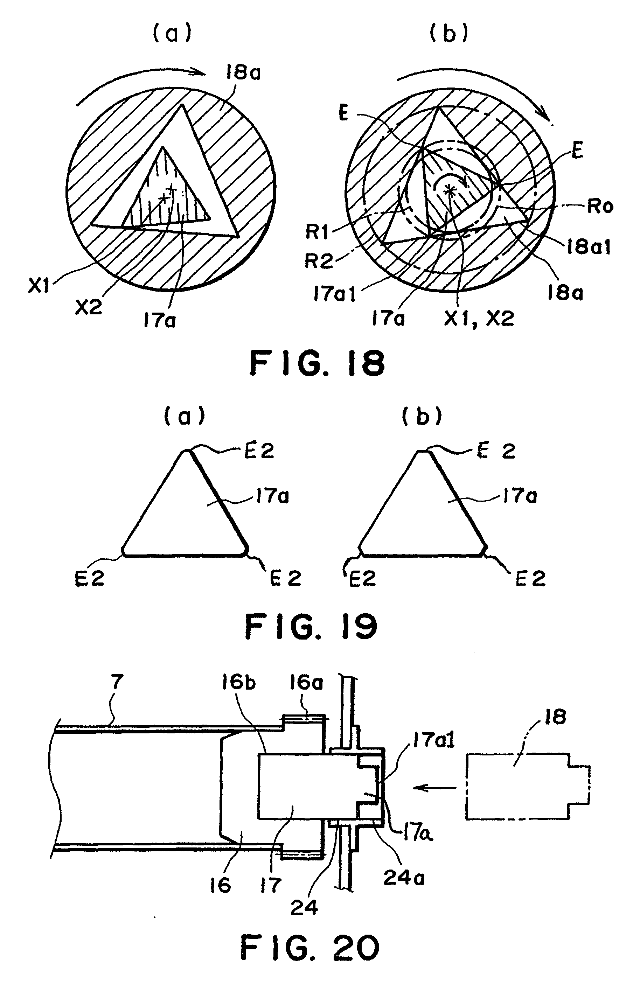

The projection 17a has a twisted polygonal prism configuration, more particularly, the configuration resulting from twisting a substantially equilateral triangular prism in the rotational direction. The recess 18a is a polygonal shape twisted in the rotational direction of the shaft and therefore is engageable with or complementary with the projection 17a. The recess 18a has a section of substantially equilateral triangle. The recess 18a integrally rotates with the gear 34 of the main assembly 13. In the structure of this example, the process cartridge B is mounted to the main assembly 13, and the projection 17a and the recess 18a of the main assembly 13 are engaged. When the rotation force is transmitted from the recess 18a to the projection 17a, the apexes of the projection 17a of the equilateral triangle are contacted regularly with the inside surfaces of the recess 18a, and therefore, the centers thereof are automatically aligned by the rotation, as will be understood from Figure 18, (a) and (b). Further, the force in the direction of pulling deviating the projection 17 to the recess 18 is produced during rotation due to the twisting directions thereof, so that the end surfac 17a1 of the projection is contacted to the end surface 18a1 of the recess 18a. Since the photosensitive drum 7 is integral with the projection 17a, the axial position and radial position there are correctly determined in the main assembly 13 of the image forming apparatus.

In this example, as seen from the photosensitive drum 7, the direction of twisting of the projection 17a is opposite from the rotation direction of the photosensitive drum 7 away from the base portion of the projection toward the end portion thereof. The direction of twisting of the recess 18a is opposite therefrom away from the inlet portion of the recess 18a toward the inside. The direction of twisting of the helical gear 16a of the drum flange 16, which will be described hereinafter, is opposite from the twisting direction of the projection 17a.

As shown in Figure 18, the projection 17a and the recess 18a satisfy d1 < d0 < d2, where d0 is a diameter of a circumscribed circle R0 of the triangular prism of the projection 17a, d1 is a diameter of an inscribed circle R1 of the space in the form of triangle of the recess 18a, and d2 is a diameter of a circumscribed circle R2 of the triangle.

Preferable examples of the numerical ranges of the diameters are as follows:

     d0 = approx. 3 mm - 70 mm
     d1 = approx. 3 mm - 70 mm
     d2 = approx. 3 mm - 70 mm

In these ranges, the sizes are selected so as to satisfy the above-described relations.

In this example, the sizes are as follows:

     d0 = approx. 16 mm
     d1 = approx. 9.5 mm
     d2 = approx. 17.5 mm

The degree or amount of the twisting of the projection 17a is approx. 1° - 15° per 1mm of the axial length of the projection 17a in the rotational direction. More particularly, in this example, it is twisted at approx. 7.5° per 1mm of the axial length.

However, the present invention is not limited to these values.

The position of a cross-section of a three dimensional member is determined by there contact points, theoretically. When the configurations of the projections 17a and the recesses 18a are substantially equilateral triangular, the apexes of the projection 17a are contacted to the inside surfaces of the equilateral triangle under the same conditions. Therefore, the changes of the contract points and the rotation non-uniformity of the coupling driving due to the load variation during the rotation of the process cartridge B are minimized, thus improving the rotation accuracy of the photosensitive drum 7 (Figure 18). The male shaft 17 and projection 17a are provided on the drum flange 16 so that when the drum flange 16 is mounted to an end of the photosensitive drum 7, it is aligned with the axis of the photosensitive drum 7. Designated by 16b is an engaging portion which is engaged with an inside surface of the drum cylinder 7a when the drum flange 16 mounted to the photosensitive drum 7. The drum flange 16 is mounted to the photosensitive drum 7 by cramping, bonding or the like. The outer surface of the drum cylinder 7a is coated with a photosensitive material 7b (Figure 8 and 9 reference).

A drum flange 25 is fixed to the other end side of the photosensitive drum 7. The drum flange 25 has a drum shaft 25a and spur gear 25b integrally formed therewith.

When the process cartridge B is mounted to the main assembly 13 of the apparatus, the drum shaft 25a (bearing 12c2) is engaged with an U groove 15b (Figure 5) of the main assembly 13 of the apparatus so as to be correctly positioned, and the spur gear 25b integrally molded with the flange 25 is meshed with a gear (shown) for transmitting the driving force to the transfer roller 4.

Examples of the material of the drum flange 16 include polyacetal (polyacetal), polycarbonate (polycarbonate) and polyamide (polyamide), polybutylene terephthalate, or another resin material. Other materials are usable.

Around the projection 17a of the male coupling shaft 17 of the process cartridge B, a circular projection 24a coaxial with the male shaft 17 is provided on the cleaning frame 12c (Figures 3 and 9). The projection 24a functions to protect the coupling projection 17a when, for example, the process cartridge B is mounted or demounted relative to the main assembly, so that the coupling projection 17a is prevented from being damaged or deformed by external force or the like. Thus, the vibration or wobbles during the coupling driving operation due to the damage of the projection 17a, can be avoided.

The projection 24a also can function as a guiding member for the mounting and demounting of the process cartridge B relative to the main assembly 13 of the image forming apparatus. More particularly, when the process cartridge B is mounted to the main assembly A, the projection 24a is contacted to the main assembly side guide portion 15c and functions to guide the process cartridge B to the mounting position of the apparatus, thus facilitating the mounting and demounting of the process cartridge B relative to the main assembly 13. When the process cartridge B is mounted to the mounting position, the projection 24a is supported by the recess 15d provided on the guide portion 15c. When the male coupling shaft 17 and female shaft 18 are aligned by the driving for the image formation, the projection 24a is raised slightly from the U groove 15d (approx. 0.3mm-1.0mm), and the gap between the projection 24a and the main assembly guide portion 15a(recess 15d) is smaller than the gap between the coupling projection 17a and the recess 18a in the radial direction. Therefore, the engagement between the coupling projection 17a and the recess 18a are permitted while the process cartridge B is mounted to the main assembly 13. A recess 18a is provided opposed to the U groove 15d. The configuration of the projection 24a is not limited to the circular as in this example, but may be any, for example, arcuate configuration, if it is guided by the guide portion 15c, and is supported by the U groove 15d. In this example, the bearing 24 for supporting rotatably the shaft portion 17 and the circular projection 24a are integrally molded, and is fixed to the cleaning frame 12c by screws (Figure 9), but the bearing 24 and the projection 24a may be separate members.

In this example, the drum shaft 25a is engaged with the bearing portion 12c2 provided in the cleaning frame 12c (Figure 49), and the male shaft 17 is engaged to the inside surface of the bearing 24 provided in the cleaning frame 12c, and with this state, the photosensitive drum 7 is mounted to the cleaning frame 12c of the process cartridge B. Therefore, the photosensitive drum 7 is rotated about the shaft 17 and 25a. In this example, the photosensitive drum 7 is mounted to the cleaning frame 12c in the manner that the movement thereof in the axial direction is possible. This is done in consideration of the mounting tolerance. This structure is not inevitable, and the photosensitive drum 7 may be non-movable in the slide direction.

Among the photosensitive drum 7, the flange 16 and the male coupling shaft 17, there is a relationship as shown in Figure 9. More particularly, the outer diameter of the photosensitive drum 7 (outer diameter of the cylinder 7a) = D1, the helical gear dedendum circle diameter = G, the diameter of the photosensitive drum bearing (outer diameter of the shaft portion 17, the inner diameter of the bearing 24) = F, the diameter = C of the circumscribed circle of the coupling projection, and the engaging portion diameter(drum inner diameter) = D2 of the drum flange 16 relative to the photosensitive drum 7, satisfy D1 > F ≥ C and G > D2.

The D1 > F is effective to reduce the torque required by the sliding load at the bearing. The F ≥ C is effective to simplify the mold structure when the flange portion is molded since the undercut portion is not required which otherwise is required in the mold division of the mold in the direction of the arrow H in the Figure.

Furthermore, because of the G > D2 satisfied, the mold configuration of the gear portion is on the left side mold in Figure 6, and therefore, the right side mold structure which is complicated due to the provision of the coupling configuration is simplified, and therefore, the durability of the mold is improved.

The dimensional relations apply in the case that the relation between the male shaft 17 and the female shaft 18 are reversed, that is, in the case that the photosensitive drum is provided with the recess 18a while the main assembly side of the apparatus is provided with the projection 17a (the diameter of the circumscribed circle of the polygonal of the recess 18a is C).The same advantages are provided in such a case, too.

Examples of the numerical ranges of them are as follows:

D1 = approx. 10 mm - 60 mm
G = approx. 10 mm - 70 mm
F = approx. 5 mm - 70 mm
C = approx. 3 mm - 70 mm
D2 = approx. 9 mm - 59 mm.

The sizes may be selected within these ranges so as to satisfy the above-described relations.

In this example, sizes are as follows:

D1 = approx. 30 mm
G = approx. 31 mm
F = approx. 16 mm
C = approx. 14 mm.

However, the present invention is not limited to these sizes.

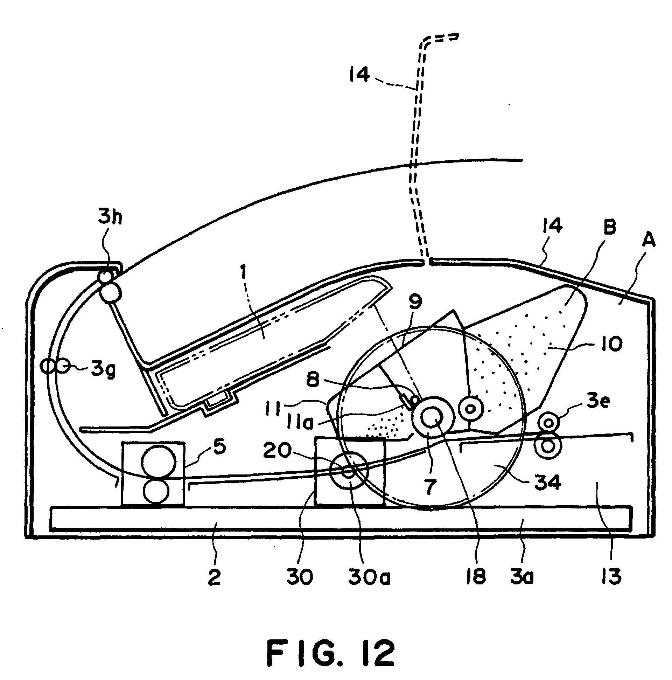

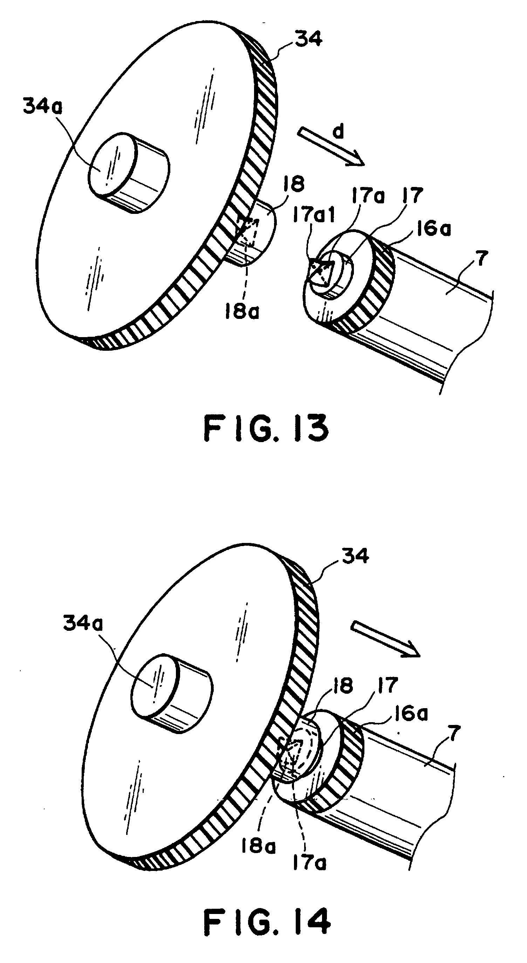

On the other hand, the main assembly 13 of the image forming apparatus is provided with main assembly coupling means. The main assembly coupling means includes a female coupling shaft 18(circular column configuration) at a position in alignment with the photosensitive drum rotation axis when the process cartridge B is inserted. The female coupling shaft 18 is a driving shaft integral with the large diameter gear 34 for transmitting the driving force from the motor 30 to the photosensitive drum 7, as shown in Figure 12. The female shaft 18 is projected from a lateral edge of the gear 34 at a rotation center of the gear 34 (Figure 13, 14). In this example, the large diameter gear 34 and the female coupling shaft 18 are integrally molded.

The gear 34 in the main assembly side is a helical gear. The tooth thereof has such an inclination angle that a thrust is produced in the direction of moving the female shaft 18 toward the male shaft 17 when the driving force is transmitted thereto from the helical gear 20 fixed to the shaft 30a of the motor 30. Therefore, when the motor 30 is driven upon image formation, the thrust is effective to move the female shaft 18 to the male shaft 17 to establish firm coupling between the recess 18a and the projection 17a. The recess 18a is provided at the rotation center of the female shaft 18 at and end of the female shaft 18.

In embodiment, the driving force is transmitted directly from the gear 20 fixed to the motor shaft 30a to the gear 34, a gear train may be used for deceleration and driving transmission, or the use may be made with belt and pulley, a pair of friction rollers or a combination of timing belt and pulley.

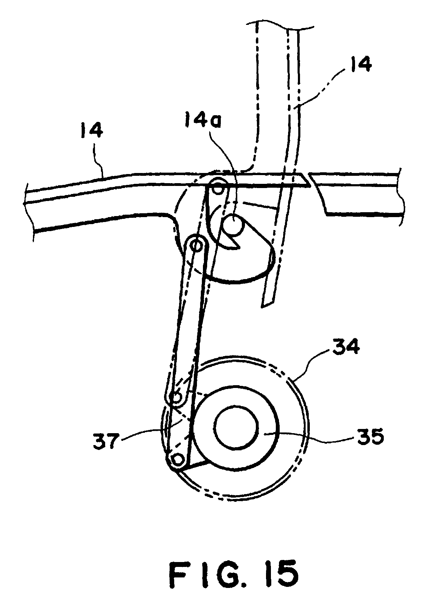

Referring to Figure 15 to Figure 17, the description will be made as to the structure for engaging the recess 18a and projection 17a in interrelation with the closing operation of the openable cover 14.

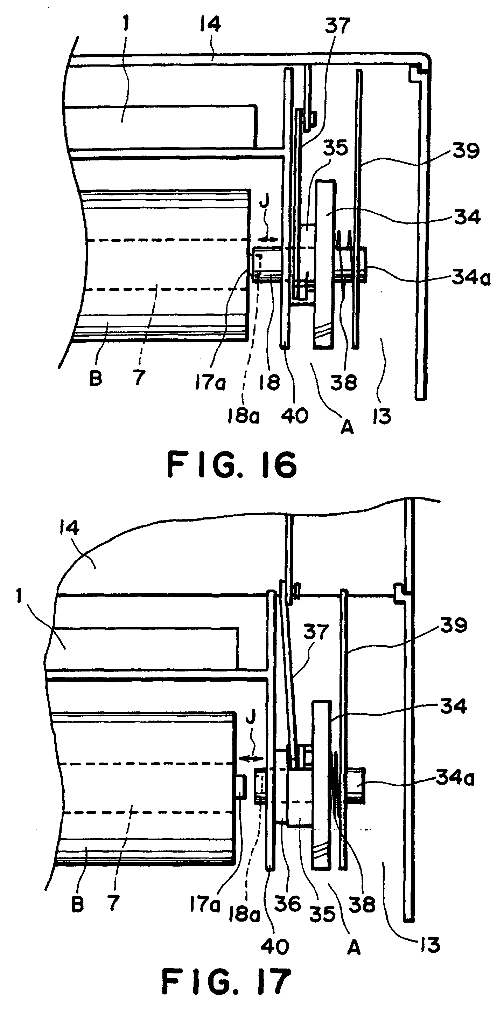

Figure 15 is a view as seen in a direction of the axis of the photosensitive drum 7, wherein an outer cam 35 and an inner cam 36(Figure 17 reference) are disposed between the gear 34 and the photosensitive drum 7(unshown), and the cover 14 of the image forming apparatus and the outer cam 35 are connected by a rod 37, thus constituting a moving means. Designated by 40 is a side plate provided in the main assembly 13. Referring to Figures 16 and 17, designated by 34a is a shaft supporting portion for supporting the gear 34 on the side plate 39.

Figure 16 is a view as seen from the right side. When the cover 14 is closed, the rod 37 and the outer cam 35 and so on take the position shown in this Figure, and they are coupled by the coupling projection 17a and the recess 18a to permit driving force transmission from the gear 34 to the photosensitive drum 7. When the cover 14 is opened, the cam 35 is pulled through the rod 37, as shown in Figure 17, and therefore, the cam 35 is rotated to be contacted to the inner cam 36, thus moving the gear 34 away from the photosensitive drum 7. At this time, the gear 34 and the female coupling shaft 18 are pushed by the outer cam 35 to push the spring 38 mounted between itself and the fixing plate 39 and moves in the same direction, so that the recess 18a becomes away from the projection 17a to release the coupling, by which the cartridge B demounting is enabled. When the cover 14 is closed, the cam 35 rotates in the opposite direction and is pushed by the spring 38 so that the gear 34 is reset to the position shown in Figure 16 to enable the driving transmission. With this structure, the mounting-and-demounting of the cartridge B and the drive transmission are disabled and enabled in response to the opening and closing of the cover 14.

In this example, the cover 14 is opened and closed when the process cartridge B is mounted to or demounted from the main assembly of the apparatus. In interrelation with the opening and closing of the cover 14, the recess 18a moves in a horizontal direction (arrow j direction). When the process cartridge B is mounted or demounted relative to the main assembly, the coupling (between 17a and 18a) between process cartridge B and the main assembly 13 of the apparatus is assuredly disengaged. Therefore, the mounting-and-demounting of the process cartridge B relative to the main assembly 13 can be smoothly carried out. In this example, the recess 18a is urged toward the process cartridge B by the spring 38. Therefore, even if the projection 17a and the recess 18a are not aligned, and therefore abutment occurs therebetween, and are not engaged, they are engaged instantaneously upon the rotation of the recess 18a.

The description will be made as to the configurations of the projection 17a and the recess 18a which are engaging portion of the coupling means.

The female coupling shaft 18 provided in the main assembly 13 is movable toward the rotational shaft, as described hereinbefore, but is not movable in the radial direction. The process cartridge B is mounted in the main assembly 13 of the apparatus such that it is movable in the longitudinal direction and radial direction of the photosensitive drum 7.

More particularly, when the process cartridge B is mounted in the main assembly 13 of the device, a portion of the drum shaft 25a (bearing 12c2) (Figure 4 and 9) formed on the flange 25 mounted adjacent the other longitudinal end of the photosensitive drum 7 is received by the (U groove) 15b(Figure 5) of the main assembly 13 and is engaged therewith without gap, so that it is correctly positioned, and the spur gear 25b integrally molded with the flange 25 is meshed with a gear (not shown) for transmitting the driving force to the transfer roller 4. On the other hand, at the longitudinal end of the photosensitive drum 7 (driving side), the projection 24a of the cleaning frame 12c is supported by the recess 15d of the main assembly 13. By closing the cover 14, the recess 18a is moved in a horizontal direction and is received by the projection 17a (Figure 8 (a)).

The positioning and driving transmission at the driving side(coupling side) are as follows.

When the main assembly driving motor 30 is rotated, the female coupling shaft 18 is moved toward the male coupling shaft 17 (arrow d in Figure 13), and they are engaged when the phases of the projection 17a and the recess 18a are matched (in this example, since the projection 17a and recess 18a have substantially equilateral triangular configurations, the phases thereof matches at every 120°). Then the rotation force is transmitted from the main assembly 13 of the apparatus to the process cartridge B (from the state of Figure 17 to the state of Figure 16).

Since the sizes of the equilateral triangles are different, more particularly, the size of the triangle of the recess 18a is larger than that of the projection 17a (as shown in Figure 8 (a)), the projection 17a is smoothly engaged into the recess 18a with the gap therebetween. The accuracy of the positioning between the male coupling shaft 17 and female coupling shaft 18 may be rough at the time of engaging action.

In this example, the projection length of the circular projection 24a is larger than that of the projection 17a (Figure 9). Therefore, when the projection 17a and the recess 18a are engaged, the inside surface of the circular projection 24a is engaged with the outer peripheral surface of the female coupling shaft 18 to guide the engagement therebetween.

When the female coupling shaft 18 is rotated with the projection 17a engaged with the recess 18a for image formation, the inside surfaces 18a1 of the recess 18a are engaged to the apex lines E of the equilateral triangular prism of the projection 17a (as shown in Figure 18) to permit the transmission of the driving force. At this time, the male shaft 17 instantaneously moves so that the inside surfaces 18a1 of the recess 18a are contacted to the edge lines E of the projection 17a at regular positions (equidistantly) (from the state of Figure 18 (a) to the state of Figure 18 (b)). Since the projection 17a and the recess 18a are both substantially equilateral triangles, the male shaft 17 and the female shaft 18 are brought into the coaxial state with each other with uniform contact forces. Immediately after the projection 17a is brought into engagement with the recess 18a, the rotation center of the projection 17a is not aligned with the rotation center X2 of the recess 18a (Figure 18 (a)). However, when the recess 18a starts to rotate, and it is contacted to the edge line E of the projection 17a at 3 points (lines), the rotation centers X1 and X2 are substantially aligned.

Thus, the coupling shaft 17 and 18 are automatically axis aligned by the rotation of the motor 30 (self-alignment). Furthermore, by the driving force transmission to the photosensitive drum 7, the process cartridge B is rotated, by which the abutment portion 12c1 provided on the top surface of the cleaning frame 12c of the process cartridge B (Figures 3 and 4) is abutted to the abutment portion 13a (Figure 1) fixed to the main assembly 13 of the image forming apparatus, so that the process cartridge B is precisely positioned to the main assembly A of the image forming apparatus.

When the process cartridge is not driven (non-image formation), the gap is provided between the projection 17a and recess 18a in the rotation radius direction (radial direction), the engagement between the couplings and the mounting and demounting of the process cartridge relative to the main assembly are made easier. Additionally, the contact force at the coupling engagement portion is stabilized, so that the wobble and vibration at this position can be suppressed.

In this example, the coupling projection and recess have the substantially equilateral triangular configurations, but the similar advantage can be provided if the configuration is equilateral polygonal. The use of equilateral polygonal configuration is preferable since the positioning is correct, but any polygonal configurations are usable if the engagement is possible and pulling engagement is possible.

When the comparison is made between the coupling projection and recess, the projection is easily damaged, and the strength thereof is smaller than the recess. In this example, the coupling projection is provided in the process cartridge B which is exchangeable, and the coupling recess is provided in the main assembly 13 which is required to have a higher strength.

The process cartridge B of embodiment is summarized as follows. The process cartridge B of this example is detachably mountable relative to a main assembly of an electrophotographic image forming apparatus A comprising a motor 30, a main assembly gear 34 for receiving the driving force from the motor, and a twisted polygonal hole 18a integrally rotatable with the main assembly gear, the hole being formed at the center of the main assembly gear, the electrophotographic image forming apparatus A being capable of forming an image on the recording medium 2. The process cartridge comprises the electrophotographic photosensitive drum 7, the process means actable on the electrophotographic photosensitive drum (charging roller 8, developing roller 10, cleaning blade 11a), and a twisted polygonal prism projection(projection 17a) engageable with the twisted polygonal hole of the main assembly, said projection is provided at the end of the electrophotographic photosensitive drum; The process cartridge B is mounted to the main assembly 13 of the main assembly, and the polygonal prism projection 17a is engaged with the recess of the main assembly, and when the gear 34 is rotated, the rotational driving force is transmitted to the photosensitive drum.

The projection 17a is projected from the end of the shaft portion 17 projected outwardly in the longitudinal direction of the drum from the rotation center position of the drum 7. The shaft portion functions to rotatably support the drum 7 on the cartridge frame 12c.

The shaft portion 17 is provided at the central portion of the helical gear 16a, and at the opposite end from the helical gear 16a side, an engaging portion 16b for engagement with the inside surface of the electrophotographic photosensitive drum 7 is provided. The projection 17a, the shaft portion 17, the helical gear 16a, and the engaging portion 16b are integrally molded of a resin material material. The helical gear functions to transmit the rotation force to the developing roller 10a as the process means.

Furthermore, there is provided a circular outer wall 24a enclosing the polygonal prism projection 17a, or an arcuate configuration outer wall along a part of the polygonal prism projection. The outer wall 24a functions as a guide when the engagement between the hole 18a and the projection 17a by relative movement therebetween.

The outer diameter D1 of the electrophotographic photosensitive drum 7, the outer diameter F of the shaft portion 17, and the diameter C of the circumscribed circle of the polygonal prism projection 17a, satisfy $D1 > F \geq C$.

The outer diameter F of the shaft portion 17, the diameter C of the circumscribed circle of the polygonal prism projection 17a, the dedendum diameter G of the gear 16a of the electrophotographic photosensitive drum 7, and the inner diameter D2 of the electrophotographic photosensitive drum 7, satisfy $G > D2$ and $G > F \geq C$.

The outer diameter D1 of the electrophotographic photosensitive drum 7, and the dedendum circle diameter L of the main assembly gear 34, L is preferably not less than approx. 1.0 times D1 and not more than 5.0 times D1. The relation is properly selected by one skilled in the art in consideration of the space of the main assembly of the device and the desired image quality. The dimensions are not limiting. In this example, it is approx. 3 times.

The module of the main assembly gear 34 is approx. 0.4 - 0.7. The dedendum diameter L of the main assembly gear 34 of the device is approx. 30 mm - 150 mm, and the number of teeth of the main assembly gear 34 is approx. 40 teeth to 400 teeth. They are properly selected by one skilled in the art in consideration of the space in the main assembly and desired image quality. The figures are not limiting. In this example, the module of the gear 34 is approx. 0.5, and L is approx. 100 mm, and the number of the teeth of the gear 34 is 200 teeth.

The positioning of the process cartridge B relative to the main assembly 13 during the image formation (driving transmission) is summarized as follows.

First, the process cartridge B is positioned by the bearing 12 being snugly fitted in the U groove 15d during the non-image formation. On the other hand, the projection 24a is simply supported by a receptor portion 15c. During the image formation, the process cartridge B is positioned by the projection 17a being attracted by the recess 18a of the main assembly 13 and being engaged with the projection 17a. Namely, during the image formation, the process cartridge B is positioned by the U groove 15b at one longitudinal end, and by the recess 18a at the other end. In this example, the photosensitive drum 7 is movable in the longitudinal direction (approx. 0.1 mm-1.0 mm). When the projection 17a is attracted to the recess 18a, the end portion 16c of the drum flange 16 (Figures 7 and 8 and Figure 9) is brought into contact to the end portion 24b of the bearing 24. The process cartridge B, which is mounted movably relative to the main assembly side plate or mounting guides 15a and 15c with play of approx. 0.1 - 3 mm) in consideration of assembly tolerance, is pulled toward the photosensitive drum 7 in the longitudinal direction and in the radial direction, thus moving in an inclined upward direction. In the case the end portion 16c is in contact with the end portion 24b at the beginning, or when the photosensitive drum 7 does not have a play in the longitudinal direction, the process cartridge B is pulled to the photosensitive drum 7 immediately in its longitudinal direction and in the radial direction, thus moving in an upward inclined direction.

During the image formation operation, the process cartridge B receives the rotation force in the same direction as the rotation direction of the photosensitive drum 7. By this rotation force, the contact portion 12c1 is contacted to the fixed portion 13a.

Accordingly, the process cartridge B is correctly positioned relative to the main assembly 13 of the apparatus in both the longitudinal direction and the radial direction during the image formation operation.

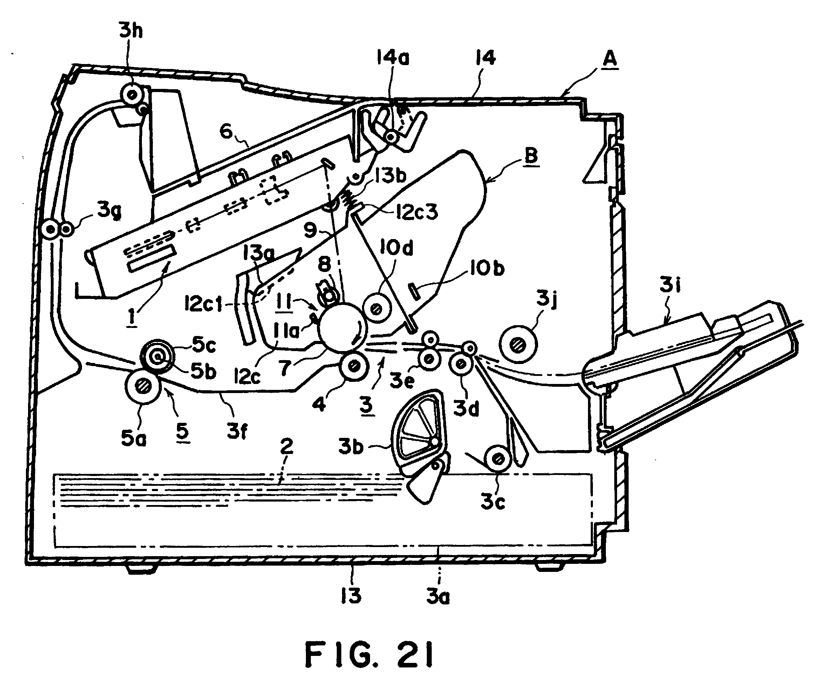

When the process cartridge B is pushed by an elastic member as in Figure 21 example, the process cartridge B may not move in the longitudinal direction of the drum 7, depending on the strength of the elastic force provided by the elastic member. Even in that case, when the drive transmission starts, the process cartridge B moves in the radial direction (substantially upward) so that it is correctly positioned relative to the main assembly. In this case, even if the drum 7 does not involve the play in the longitudinal direction, the process cartridge B is correctly positioned relative to the main assembly.

Referring back to Figure 18, it will be understood that the coupling mechanism is summarized as follows. The driving rotatable member 18a for receiving driving force from the motor is provided with a twisted recess or projection having a non-circular cross-section and substantially coaxial with a rotation axis X2 of the drive rotatable member 18a. The member to be driven or the image bearing member is provided with a twisted projection or recess 17a provided at a longitudinal end of the image bearing member, having a non-circular cross-section and substantially coaxial with a rotation axis of the image bearing member, wherein the projection or recess of the image bearing member 17a has such a dimension and configuration that it can take a first relative rotational position (Figure 18, (a), for example) with respect to the recess or projection of the driving rotatable member 18a in which relative rotational movement therebetween is permitted, and a second relative rotational position (Figure 18, (b), for example) with respect to the recess or projection of the driving rotatable member 18a in which relative rotational movement is prevented in one rotational direction (indicated by arrows in Figure 18, (b)), while the rotation axis X2 of the driving rotatable member 18a and the rotation axis X1 of the image bearing member are substantially aligned with each other.

It is preferable that the recess or projection of said driving rotatable member and the projection or recess of the image bearing member are contacted substantially at three twisted points (lines). It is further preferable that the three points constitute a substantially equilateral triangle.

Embodiment 2

Referring to Figure 19, the description will be made as to embodiment 2 of the projection 17a of the male coupling shaft 17. The fundamental structures of the process cartridge and the image forming apparatus are the same as in embodiment 1, and therefore, the same reference numerals as in embodiment 1 are assigned to the elements having the corresponding functions, and detailed descriptions thereof are omitted for simplicity.

The coupling projection 17a of Figure 19 is different from that in embodiment 1 in that the apexes E2 of the substantially equilateral polygonal prism shape of the projection (it is substantially equilateral triangle shape in Figure 19) are beveled. The beveling includes rounding as shown in Figure 19, (a) and straight cutting as shown in Figure 19, (b).

With this structure, the collapse of the apexes of the projection 17a during handling of the process cartridge B can be avoided. During the driving, the deformation and deflection of the apexes due to insufficient strength can be avoided. Thus, the decrease of the alignment accuracy between the male shaft 17 and the female shaft 18 can be prevented, and the wobble and vibration at the coupling portion can be avoided.

In Figure 19, (a), as will be understood when this configuration is introduced in the projection 17a of Figure 18, (b), the portions contacted to the inner surface of the recess is not the outermost points of the configuration of Figure 19, (a), but is portions slightly deviated therefrom (at each apex portion). From the standpoint of axis alignment, it is preferable that such deviated three contact points constitute a substantially equilateral triangle.

Similarly, in Figure 19, (b), it is preferable that the three points constitute a substantially equilateral triangle.

For the same reason, in a polygonal projection (polygonal recess) examples, it is preferable that the projection and recess are contacted at three points which constitute a substantially equilateral triangle, from the standpoint of the axis alignment.

In the case of Figure 19, (a), each contact point (actually a twisted line) in the cross-section may have a certain width. In such a case, the centers or one side ends of the widths are deemed as the points to constitute the triangle.

Embodiment 3

Referring to Figure 20, the description will be made as to embodiment 3 of the projection of the male coupling shaft 17. The fundamental structures of the process cartridge and the image forming apparatus are substantially the same as in embodiment 1.The same reference numerals as in embodiment 1 are assigned to the elements having the corresponding functions, and detailed descriptions thereof are omitted for simplicity.

In embodiment 1, the flange 16 of the photosensitive drum 7 and the male coupling shaft 17 are integral, but they may be separate members, which are incorporated in the process cartridge B, respectively.

When the male coupling shaft 17 and the flange 16 are separate members, as in this example, the male coupling shaft 17 can be mounted into the engaging portion 16b of the flange 16 by press-fitting or the like after the photosensitive drum 7 with the flange 16 is incorporated in the frame 12c, so that the photosensitive drum 7 may not be assembled into the frame 12c in an inclined direction.

Embodiment 4

Referring to Figure 21, the description will be made as to embodiment 4 having a different positioning structure of the process cartridge to the main assembly of the image forming apparatus, using the coupling structure of the present invention. The fundamental structures of the process cartridge and the image forming apparatus are substantially the same as in embodiment 1.The same reference numerals as in embodiment 1 are assigned to the elements having the corresponding functions, and detailed descriptions thereof are omitted for simplicity.

As shown in Figure 21, the main assembly 13 of the image forming apparatus is provided with an elastic member 13b for urging the process cartridge B in the rotation direction of the photosensitive drum 7. The elastic member 13b is contacted to the contact portion 12c3 of the cleaning frame 12c of the process cartridge B while the process cartridge B is in the main assembly in place, and it applies the rotation force in the same direction as the rotation direction of the photosensitive drum 7 to the process cartridge B. The process cartridge B receiving the rotation force tends to rotate in the rotation direction of the photosensitive drum 7 (clockwise direction in Figure 21), but is stopped by the abutment between the abutment portion 12c1 of the frame 12c and the abutment portion 13a of the main assembly. This is effective to prevent the vibration, in the rotation direction, of the process cartridge B urged in the rotation direction of the photosensitive drum 7 by the coupling driving force, due to the internal load variation or the like. The contact portion 12c3 is provided at each of two positions, namely, adjacent one end side and other end side in the longitudinal direction of the photosensitive drum 7 on the top surface of the cleaning frame 12c (Figure 3 and 4).

Embodiment 5

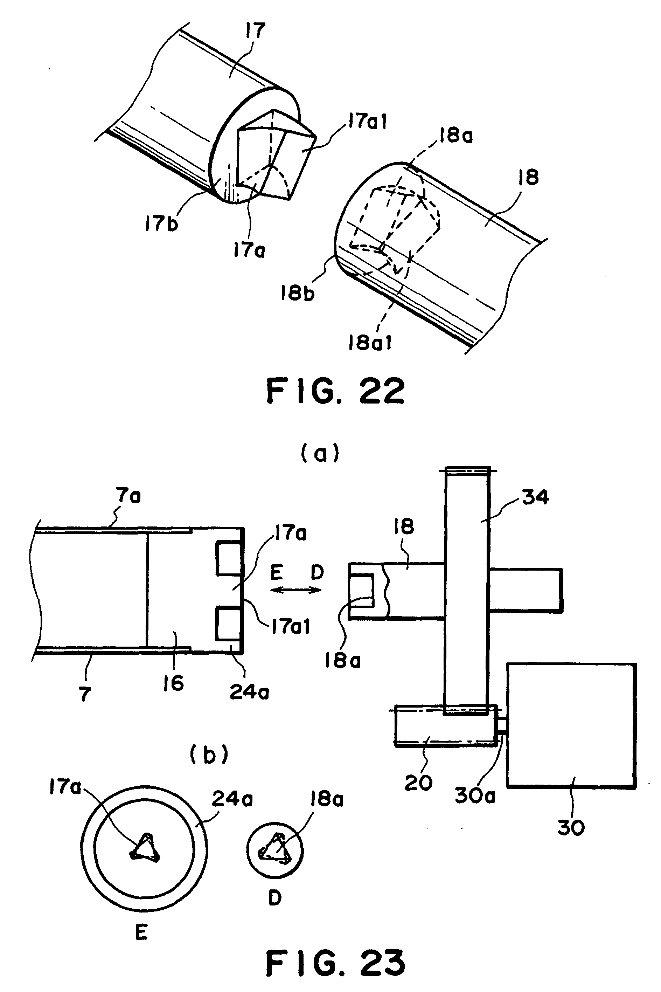

Referring to Figure 22, another embodiment of the coupling structure will be described. The fundamental structures of the process cartridge and the image forming apparatus are substantially the same as in embodiment 1. The same reference numerals as in embodiment 1 are assigned to the elements having the corresponding functions, and detailed descriptions thereof are omitted for simplicity.

In this example, as shown in Figure 22, the projection 17a of the male coupling shaft 17 and the recess 18a of the female shaft 18 has a substantially rectangular configuration section which is twisted in the rotation direction of the shaft. Similarly to embodiment 1, the durable coupling recess 18a is provided in the main assembly 13 of the image forming apparatus. With this structure, when the driving is transmitted while the coupling is in engagement, the force is produced so that the female coupling shaft 18 pulls the male shaft 17 in the axial direction due to the twisting direction thereof, by which the projection end surface 17a1 of the male coupling shaft 17 is abutted to the recess bottom surface 18a1 (or, the male shaft end surface 17b is abutted to the end surface 18b of the female shaft).

Since the position of the process cartridge B is constant in the direction of the coupling shaft in the main assembly A of the image forming apparatus during the driving operation, the vibration of the process cartridge can be suppressed.

In this example, the cross-sectional configurations of the projection 17a of the coupling shaft and the recess 18a are substantially rectangular configuration, but another polygonal prism shape is usable if the engagement is established when the coupling recess is rotated.

When the process cartridge B is demounted from the main assembly, the motor 30 may be rotated in the opposite direction, the coupling engagement is automatically released due to the thrust between the gear 33 and the helical gear 34. In this case, there is no need of using the coupling release mechanism as in embodiment 1.

Embodiment 6

Referring to Figure 23, the description will be made as to a further embodiment. The embodiment of Figure 23 is different from embodiment 1 in that the gear is not provided on the drum flange 16.

The coupling structure shown in Figure 23, (a) and (b), is such that the main assembly side coupling means is of a female coupling shaft 18 of polyacetal (POM), and the coupling means of the cartridge side engageable therewith is of a projection 17a of POM. A cylindrical wall portion 24a concentric with the photosensitive drum 7 and formed integrally with the flange 16 is provided around the projection 17a. Figure 3, (b) is a pair of views as seen in the directions D and E of Figure 3, (a).

By the provision of a wall portion 24a having substantially the same height as the projection 17a, the projection 17a is not projected out beyond the cartridge frame, so that the damage of the end portion 17a1 of the projection 17a can be prevented.

The cylindrical wall portion 24a may also function as a guide for facilitating the mounting of the process cartridge B to the image forming apparatus A (Figure 6, guide c), as described in the foregoing.

Embodiment 7

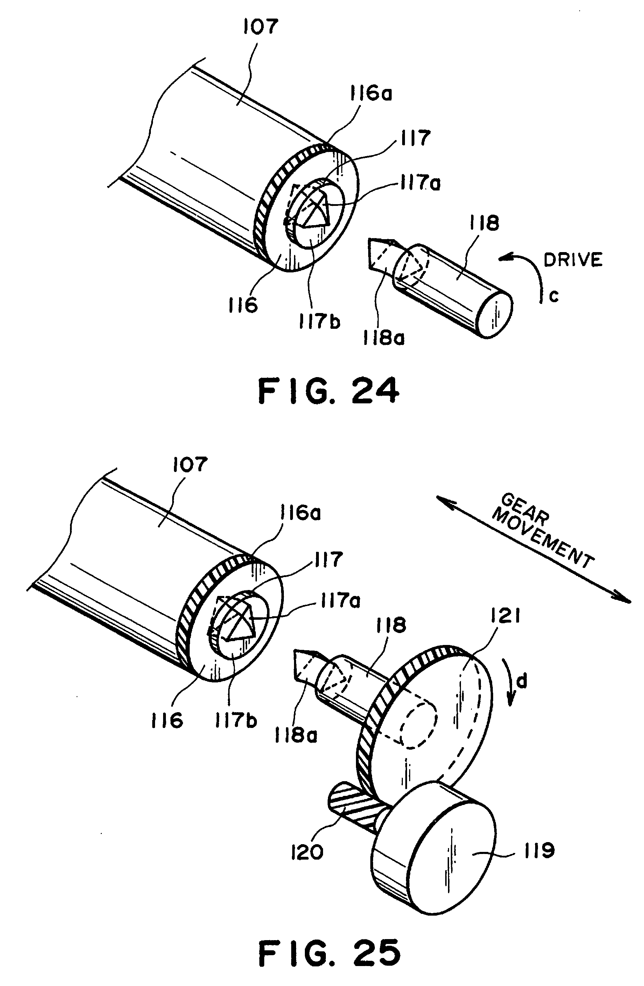

Referring to Figure 24 and 25, another embodiment will be described. In this embodiment, as contrasted to the above-described embodiment, the drum flange 116 of the photosensitive drum 7 is provided with a female shaft 117, and the large diameter gear 121 of the main assembly 13 of the apparatus is provided with a male shaft 118. The rotation accuracy can be improved, with this structure, too.

As shown in Figure 24, the substantially positive triangular prism of the projection 118a of the male coupling shaft 118 is twisted in the rotation direction, and the recess 117a of the female coupling shaft 117 is twisted correspondingly in the rotation direction. A seat 117b is provided at the end surface of the female coupling shaft 117.

By the twisting of the engaging portion in the rotation direction, the male coupling shaft 118 pulls the female shaft 117 until it is abutted to the seat 117b when the male coupling shaft 118 is rotated in the direction c for image formation while they are engaged. As a result, the combination therebetween is further assured.

When the process cartridge B is demounted from the main assembly 13, motor 119 may be rotated in the opposite direction indicated by arrow d, by which the engagement of the coupling is automatically released by the thrust produced by the meshing between the pinion gear 120 having the helical teeth and the transmission gear 121, as shown in Figure 25.

In this example, if the tolerable transmission torque of the female shaft 117 is smaller than the tolerable transmission torque of the male shaft 118, the damage of the male shaft 118 can be prevented.

For example, the female coupling shaft provided in the cartridge is made of polyacetal (POM), and the male coupling shaft constituted in the main assembly is made of zinc die-cast. By doing so, even if an abnormal torque is produced, the damage of the male shaft is prevented since the tolerable transmission torque of the male coupling shaft of the main assembly side is large.

This embodiment is the same as embodiment 1 except that the female shaft is provided in the drum flange, and the male shaft is provided in the main assembly. Therefore, the embodiments of the electrophotographic image forming apparatus, the process cartridge, the drive transmission part and the electrophotographic photosensitive drum are the same as those of embodiment 1, except that the male shaft of the drum flange is replaced with the female shaft, and the female shaft of the gear of the main assembly is replaced with the male shaft, and therefore, the description of such embodiments are omitted for simplicity.

However, the process cartridge will be described briefly. It is a process cartridge B which is detachably mountable to a main assembly 13 of an electrophotographic image forming apparatus A. The electrophotographic image forming apparatus A comprises a motor 30 (119), the main assembly helical gear 34 (121) for receiving the driving force from the motor 30 (119), and a twisted triangular prism projection 118a integrally rotatable with the main assembly helical gear of the main assembly helical gear 34 (121). The electrophotographic image forming apparatus A operates to form an image on the recording medium. The process cartridge B comprises cartridge frames 12a, 12b and 12c, the electrophotographic photosensitive drum 7 (107), the charging roller 8 for charging the electrophotographic photosensitive drum 7 (107), the cleaning blade 11a for removing the residual toner from the electrophotographic photosensitive drum 7 (107), the developing roller 10d for developing the latent image formed on the electrophotographic photosensitive drum 7 (107), a twisted triangular hole 117a engageable with the projection 118a provided at a longitudinal end of the electrophotographic photosensitive drum 7 (107), wherein the process cartridge B is mounted to the main assembly, and when the main assembly helical gear 34 (121) is rotated with the hole 117a engaged with the projection 118a, the rotational force is transmitted from the main assembly helical gear 34 (121) to the drum 7 (121) while the hole 117a is kept pulled toward the projection 118a. The hole 117a is formed as a recess at a leading edge of the shaft portion 17 (117) provided at the central portion of the drum helical gear 16a (116a). The drum helical gear 16a (116a) functions to transmission the rotation force to the developing roller 10d. The shaft portion 17 (117) functions to rotatably support the electrophotographic photosensitive drum 7 (107) on the cartridge frame 112c. The drum helical gear 16 (116a) of the hole 117 and the shaft portion 17 (117) are integrally formed from resin material. Outer diameter D1 of the electrophotographic photosensitive drum 7 (107), the outer diameter F of the shaft portion, and the diameter C of the circumscribed circle of the hole configuration 117a, satisfy $D1 > F > C$.

The outer diameter F of the shaft portion 17 (117), the diameter C of the circumscribed circle of the hole configuration, the dedendum diameter G of the gear 16a of the electrophotographic photosensitive drum 7, and the inner diameter D2 of the electrophotographic photosensitive drum 7, satisfy $G > D2$ and $G > F > C$. The outer diameter D1 of the electrophotographic photosensitive drum 7 (107), and the dedendum circle diameter L of the main assembly gear 34 (121), L is preferably not less than approx. 1.0 times D1 and not more than 5.0 times D1. The module of the main assembly gear 34 (121) is approx. 0.4 - 0.7. The dedendum diameter L of the main assembly gear of the device is approx. 30 mm - 150 mm, and the number of teeth of the main assembly gear 34 is approx. 40 teeth - 400 teeth.

In this example, the direction of twisting of the projection 118a as seen from the photosensitive drum 7 (107) is the same as the rotation direction of the photosensitive drum 7 (107) in the direction from the base portion of the projection 118a toward the end, and that of the hole 117a is the same in the direction from the inlet of the hole 117a toward the inside thereof. The twisting direction of the drum flange 16a (116a) is opposite from the twisting direction of the hole 117a.

Embodiment 8

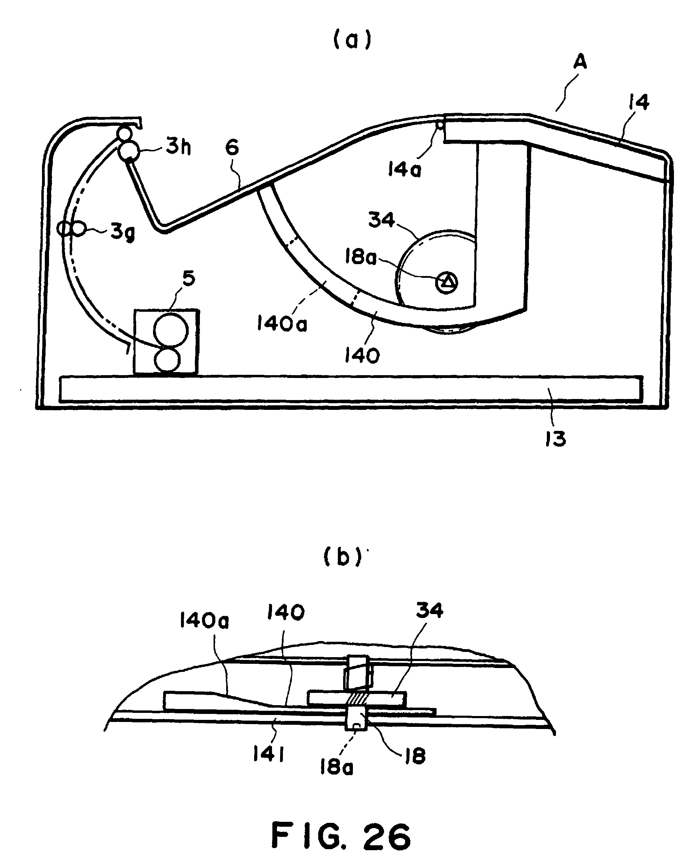

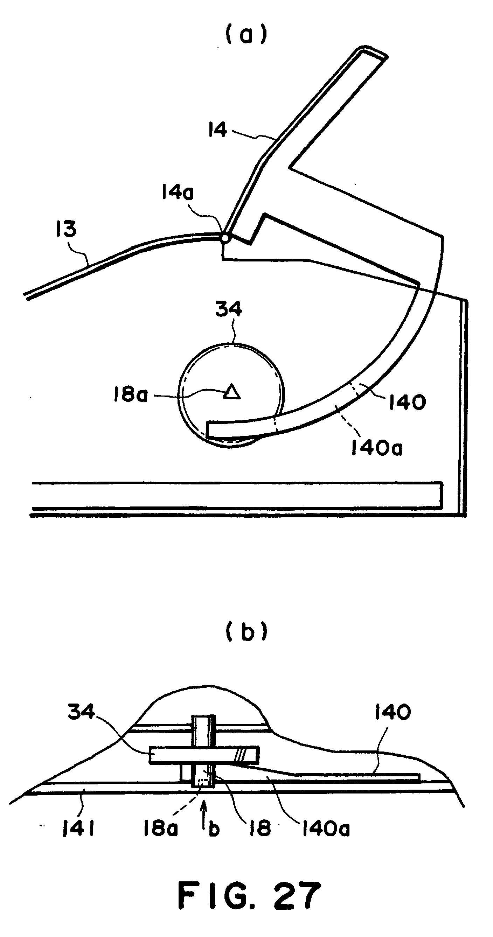

In embodiment 1, when the cover 14 is opened, the rod 37 and the cam 35 are operated in interrelation therewith to release the engagement between the coupling projection 17a and the recess 18a. The coupling release structure may be as disclosed in Figure 26 and 27.

The openable cover 14 is provided with an arcuate releasing member 140 at the center of the shaft 14a, as shown in Figure 6, (a), and the leading edge of the releasing member 140 is formed into a cam portion 140a having a gradually increasing thickness, as shown in Figure 6, (b). As shown in Figure 7, (a) and (b), when the cover 114 is opened to demount the process cartridge B, the cam portion 140a enters the space between the wall portion 141 and the gear 34 integral with the female shaft 18 to push the side surface of the gear 34 out in the direction indicated by arrow b in Figure 27. By this, the female shaft 18 is retracted from the wall portion 141 so that the engagement with the male coupling shaft 17 of the photosensitive drum 7 is released to permit smooth demounting of the process cartridge B.

The member for mounting the releasing member 140 is not limited to the openable cover 14 if it is a member operated when the process cartridge B is mounted or demounted. When the drive transmission gear 34 is a helical gear, the releasing member 140 is not inevitable, and the coupling release is possible by the thrust produced by the helical gear.

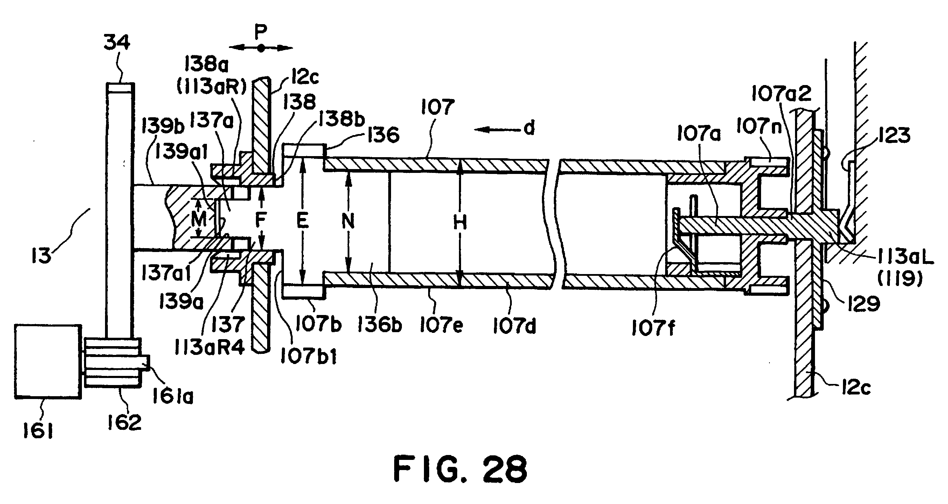

Referring to Figures 28 - 31, the description will be made as to positioning of the process cartridge relative to the main assembly of the apparatus 13 in the longitudinal direction of the photosensitive drum.

The following embodiment, different reference numerals are used, but the structure is quite similar to the foregoing embodiment. However, the positioning of the process cartridge B relative to the main assembly of the apparatus in the longitudinal direction of the photosensitive drum, will be described in more detail. Some part of the description will be repeated for easy understanding.

Figure 28 is a longitudinal sectional view of a coupling portion in the state of the photosensitive drum 107 being mounted to the process cartridge B.

As shown in Figure 28, there is provided a coupling means on the cartridge at one longitudinal end of the photosensitive drum 107 mounted the process cartridge B. The coupling means is in the form of a male coupling shaft 137 (circular column configuration) provided on a drum flange 136 fixed to the end of the photosensitive drum 107, and a free end surface of the male shaft 137 has a projection 137a. A free end surface 137a1 of the projection 137a is parallel with the end surface of the male shaft 137. The male shaft 137 is supported by a bearing 138 and functions as a drum shaft. In this example, the drum flange 136, the male coupling shaft 137 and the projection 137a, are integral. The drum flange 136 is provided with an integral drum gear 107b in the form of a helical gear to transmit the driving force to a developing roller 9c10d (Figure 2) in the process cartridge B. Therefore, as shown in Figure 28, the drum flange 136 of this embodiment, is an integrally molded member having the drum gear 107b, the male shaft 137 and the projection 137a, and is a driving force transmission part for transmitting the driving force.

The configuration of the projection 137a is, similarly to the foregoing embodiment, a twisted prism. The recess 139a for engaging with the projection 137a is a polygonal (cross-section) hole slightly twisted in the rotational direction along the axial direction. The projection 137a and the recess 139a have the same twisting pitches, and are twisted in the same direction. The recess 139a has a substantially triangular cross-section. The recess 139a is provided on a female coupling shaft 139b integral with the gear 34 provided in the main assembly 13. The female coupling shaft 139b, as has been described hereinbefore, is supported by the main assembly of the apparatus for rotation and for axial movement. With the structure of the example, when the process cartridge B is mounted to the main assembly of the apparatus, and the projection 137a and the recess 139a of the main assembly of the apparatus are engaged with each other to transmit the rotating force from the recess 139a to the projection 137a, the edge line of the projection 137a of the substantially equilateral triangular prism and the inner surface of the recess 139a are contacted uniformly. To accomplish this, the diameter of the circumscribed circle of the coupling projection 137a is larger than that of the inscribed circle of the coupling recess 139a, and is smaller than that of the circumscribed circle of the coupling recess 139a. Furthermore, because of the configuration of the twisting, a force is produced in a direction of the recess 139a attracting the projection 137a so that free end surface of the projection 137a1 is brought into contact with the bottom surface 139a1 of the recess 139a. By this, the positions of the process cartridge is determined in the longitudinal and radial directions of the photosensitive drum 7 relative to the main assembly 14 of the image forming apparatus. Therefore, position of the process cartridge B relative to the main assembly of the apparatus in the longitudinal direction of the photosensitive drum 7, is determined. The twisting direction of the drum gear 107b is the direction in which a thrust force is produced in the direction of the arrow d, in this example. The thrust forces in the coupling portion and the drum gear 107b, are both directed as indicated by the arrow d, and therefore, the position of the photosensitive drum 7 integral with the projection 137a in the axial and radial directions, is stably determined in the main assembly 13 of the image forming apparatus.

In this example, the twisting direction of the projection 137a is opposite from the rotational direction of the photosensitive drum 107 toward the free end away from the bottom trunk of the projection 137a, as seen from the photosensitive drum 107; and the twisting direction of the recess 139a is opposite therefrom toward the inside away from the inlet of the recess 139a. The twisting direction of the drum gear 107b of the drum flange 136 is opposite from the twisting direction of the projection 137a.

The male shaft 137 and the projection 137a are disposed on the drum flange 136 such that when the drum flange 136 is mounted to the end of the photosensitive drum 107, they are coaxial with the photosensitive drum 107. Designated by 136b is a fixing portion where the drum flange 136 is fixed to the inner surface of the drum cylinder 107d when the drum flange 136 is mounted to the photosensitive drum 107. The fixing of the drum flange 136 to the photosensitive drum 107, may be by crimping or bonding. The circumferential surface of the drum cylinder 107d is coated with a photosensitive layer 107e.

As described in the foregoing, the other end of the photosensitive drum 107 is provided with a spur gear 107n fixed thereto.

The material of the drum flange 136 and the spur gear 107n may be polyacetal, polycarbonate, polyamide, polybutylene terephthalate or anther resin material. Another material may be used.

Around the projection 137a of the male coupling shaft 137 of the process cartridge B, there is provided a cylindrical projection 138a (cylindrical guide 113aR) coaxial with the male shaft 137 and integral with the bearing 138 fixed to the cleaning frame 12c. By the projection 138a, the projection 137a of the male coupling shaft 137 is protected upon the mounting-and-demounting of the process cartridge B, or the like, thus protecting it from damage or deformation or the like due to the external force. The play or the vibration during the coupling driving due to the damage of the projection 137a, can be prevented.

The bearing 138 may function also as a guiding member for mounting-and-demounting of the process cartridge B relative to the main assembly 13 of the image forming apparatus. More particularly, when the process cartridge B is mounted to the main assembly 13 of the image forming apparatus, the projection 138a of the bearing 138 is contacted to the guide portion 15c (Figure 6) of the main assembly, so that projection 138a functions as a positioning guide to the mounting position to facilitate the mounting thereof to main assembly 13. When the process cartridge B is mounted to the mounting position, the projection 138a is supported in the positioning groove 15d provided in the guide portion 15c.

Among the photosensitive drum 107, drum flange 136 and the male coupling shaft 137, there is a relationship as shown in Figure 28. More particularly, H > F ≥ M, and E > N

where H is an outer diameter of the photosensitive drum 107; E is a dedendum circle diameter of the drum gear 107b; F is a bearing diameter of the photosensitive drum 107 (the outer diameter of the shaft portion male coupling shaft 137, and the inner diameter of the bearing 138); M is a circumscribed circle diameter of the coupling projection 137a; and N is a diameter of the engaging portion of the photosensitive drum 107 with the drum flange 136 (drum inner diameter).

By H > F, the sliding load torque at the bearing portion is smaller than in the case of bearing the drum cylinder 107d; by F ≥ M, the molding structure can be simplified because there is no undercut portion when a mold for the flange is divided in the direction of the arrow p as usual.

Furthermore, by the relation of E > N, the mold having the configuration of the gear portion is disposed on the left side mold as seen in the mounting direction of the process cartridge B, and therefore, the right-hand side mold may be simple, thus improving the durability of the mold.

On the other hand, the main assembly 13 of the image forming apparatus is provided with a coupling means of the main assembly. The coupling means of the main assembly has a female coupling shaft 139b (in the form of a circular column) (Figure 28) at a position in alignment with the rotation axis of the photosensitive drum when the process cartridge B is insertion thereinto. The female coupling shaft 139b, as shown in Figure 28, is a driving shaft integral with a large gear 34 for transmitting the driving force from the motor 161 to the photosensitive drum 107, and the female shaft 139b is projected from one side of the large gear 34 coaxially therewith. In this embodiment, the large gear 34 and the female coupling shaft 139b are integrally produced by a mold.

The large gear 34 in the main assembly 13 is a helical gear, which is in meshing engagement with a small helical gear 162 integral with or fixed to the shaft 161a of the motor 161. The gears have such twisting directions and the inclination angles that when the driving force is transmitted from the small gear 162, thrust is produced tending to move the female shaft 139b toward the male shaft 137. By this, when the motor 161 is driven upon image formation, the thrust is effective to move the female shaft 139b toward the male shaft 137 so as to engage the recess 139a with projection 137a. The recess 139a is disposed at a free end of the female shaft 139b and at the center of rotation of the female shaft 139b.

In this embodiment, the driving force is directly transmitted from the small gear 162 provided on the motor shaft 161a to the large gear 34, but this is not inevitable, and a gear train is usable for speed reduction and drive transmission. Other alternatives include a belt-pulley, a pair of friction rollers, a timing belt plus pulley, or the like.

In Figure 28, designated by 119 is a drum grounding contact. The grounding contact 119 is coaxially provided with the drum shaft 107a integral with the flange 129 of an electroconductive material. To the drum shaft 107a, a grounding plate 107f electrically connected with the drum cylinder 107d, is press-contacted so that charge is discharged to outside. In this example, the flange 129 is of metal such as iron.

An end 107b1 of the drum gear 107b is abutted to an inside end surface 138b of the bearing 138 fixed to the cleaning arm 12c. By this, the axial position of the photosensitive drum 107 is determined in the process cartridge B.

The description will be made as to a configurations of the projection 137a and the recess 139a which constitute an engaging portion of the coupling means.

The female coupling shaft 139b in the main assembly 13 is movable in the axial direction, as has been described hereinbefore, but is not movable in the radial direction(radial direction). On the other hand, the process cartridge B is mounted in the main assembly 13 for movement in the longitudinal direction and in the cartridge mounting direction. In the longitudinal direction, the process cartridge B is slightly movable between the guiding members 116R, 116L provided in the cartridge mounting space.

When the process cartridge B is mounted to the main assembly 13, a cylindrical shaft 113aL (Figure 28) formed on the flange 129 at the other longitudinal end of the cleaning frame 12c is engaged into a positioning groove 15b (Figure 5) of the main assembly 13 without gap, so that correct positioning is provided, and a spur gear 107n fixed to the photosensitive drum 107 is brought into meshing engagement with a gear (not shown) for transmitting the driving force to the transfer roller 4 (Figure 1). On the other hand, at the driving side of the photosensitive drum 107, a cylindrical guide 113aR provided on the cleaning frame 12c, is supported by the positioning groove 15d (Figure 5).

By the cylindrical guide 113aR being supported by the positioning groove 15d of the main assembly 13, the axes of the drum shaft 107a and the female shaft 139b are aligned within concentricity of 2.00 mm, and a first alignment function in the coupling process is completed.

By closing the openable cover 14, the coupling recess 139a moves horizontally to enter the projection 137a (similar to the he state shown in Figure 16).

Subsequently, the driving side(coupling side) is positioned, and the drive transmission is carried out, in the following manner.

When the driving motor 161 of the main assembly 14 is rotated, the female coupling shaft 139b is moved toward the male coupling shaft 137 (the direction opposite from the direction of arrow d in Figure 28), and at the time when the phases are aligned between the male coupling shaft 137 and the recess 139a (in this example, since the projection 137a and the recess 139a have substantially equilateral triangle cross-sections, the phases are aligned for each 120 degrees), they are engaged with each other, so that rotational driving force is transmitted from the main assembly of the apparatus to the recess 139a (from the sate shown in Figure 17 to the state shown in Figure 16).

When the coupling projection 137a enters the recess 139a, the entering action is smooth, since the sizes of the substantially equilateral triangles are such that cross-section of the coupling recess 139a is larger than that of the coupling projection 137a.

If, however, the gap therebetween is too large, the rigidity of the coupling against the twist lowers because of:

　　(1) the decrease of the rigidity due to change of the cross-sectional configuration of the projection 137a; and

　　(2) the increase of resistance at the contact point due to the decrease of the contact portion radius.

If this occurs, the resultant images would not be uniform.

In this embodiment, in view of the desirable twisting rigidity, the lower limit value of the inscribed circle diameter of the triangular shape of the projection is 8.0 mm, and the inscribed circle diameter used is 8.5 mm, and the inscribed circle diameter of the recess triangular shape is 9.5 mm, and therefore, the gap is 0.5 mm.

When the gap is small, a quite high concentricity has to be accomplished before the engagement.

In this embodiment, the concentricity of 1.0 mm is accomplished with the gap of 0.5 mm to permit the proper engagement. To accomplish this, the projection length of the bearing projection 138 is made larger than that of the coupling projection 137a. In addition, by a plurality of (not less than three) projected guides 113aR4 in the bearing projection 138a, the outer diameter portion of the female shaft 139a is guided, so that concentricity between the projection 137 and the female shaft 139a before the coupling engagement, is made not more than 1.0 mm, thus stabilizing the engaging process of the coupling (second alignment function).

When the female coupling shaft 139b is rotated at the time of image formation with the coupling projection 137a in the recess 139a, the inner surface of the coupling recess 139a and the three edge lines of the substantially equilateral triangle column of the projection 137a, are contacted to permit the driving force transmission. The male coupling shaft 137 instantaneously moves such that edge lines and the inner surface of the coupling recess 139a are uniformly contacted, that is, the axes of the male coupling shaft 137 and the female shaft 139b are aligned.

Thus, an automatic alignment is accomplished between the male coupling shaft 137 and the female shaft 139b upon the driving of the motor 161. By the transmission of the driving force to the photosensitive drum 107, a rotating moment is applied to the process cartridge B, and is effective to increase contact force between a regulating abutment 12c1 on the upper surface of the cleaning frame 12c of the process cartridge B and the fixing member 13a (Figure 1) fixed to the main assembly 13 of the image forming apparatus, thus positioning the process cartridge B precisely relative to the main assembly 13 of the image forming apparatus.

When the driving is not effected, that is, when no image is formed, the engagement and disengagement of the coupling are easy, since the gap is provided in the radial direction between the coupling projection 137a and the recess 139a. During the driving, the contact force in the coupling portion is stabilized so that possible play or vibration there are suppressed.

In this embodiment, the configurations of the coupling projection and the recess are substantially equilateral triangle, but the similar effects are provided if they are substantially equilateral polygonal. The equilateral polygonal shape is preferable since the positioning is precise, but non-equilateral shape is usable if force toward each other is produced. As an alternative, a screw having a large lead is usable as the coupling projection, wherein a female screw for threading engagement with the coupling projection is usable as the coupling recess. A three-lead triangle screws of male and female shapes of this modification, corresponds to the above-described coupling projection and the recess.

When the coupling projection and the recess are compared, the projection is easily damaged, and is lower from the standpoint of strength than the recess. Therefore, in this embodiment, the coupling projection is provided in the exchangeable process cartridge B, and the coupling recess which is required to have a higher durability is provided in the main assembly 13 of the image forming apparatus.

The description will be made as to the positioning of the process cartridge B in the longitudinal direction of the photosensitive drum relative to the main assembly 13 of the apparatus.

As described hereinbefore, according to this embodiment, the projection end 137a1 is abutted to the bottom surface 139a1 of the recess by the recess 139a of the female coupling shaft 139b pulling the projection 137a of the male coupling shaft 137 in. By this, the process cartridge is correctly positioned in the axial direction of the photosensitive drum 107.

To permit this axial position by the abutment between the projection end 137a1 and the bottom surface 139a1, the photosensitive drum 107 is movable in the axial direction relative to the main assembly 13. This will be described in more detail.

The usable arrangements for permitting the movement in the longitudinal direction of the photosensitive drum 107 are as follows.

With respect to the shaft coupling for transmitting the rotating force to the process cartridge B from the main assembly of the apparatus, the female coupling shaft 139b as the driving side shaft coupling member is such that coupling recess 139a attracts the projection 137a in the axial direction upon the rotation while the recess 139a and the projection 137a are in engagement with each other.

(1-a) the photosensitive drum 107 is movable in the longitudinal direction relative to the cartridge frame, more particularly, the cleaning frame 12c; or (1-b) the photosensitive drum 107 is not movable in the longitudinal direction relative to the cleaning frame 12c.

(2-a) the cartridge frame of the process cartridge B, more particularly, the cleaning frame 12c supporting the photosensitive drum 107 is movable in the longitudinal direction relative to the cartridge mounting portion of the main assembly 13 of the apparatus, when the process cartridge is mounted to the main assembly 13. (2-b) the cleaning frame 12c is not movable in the longitudinal direction, when the process cartridge is mounted to the cartridge mounting portion of the main assembly of the apparatus.

In this embodiment, the end surface 137a1 of the projection 137 is abutted to the bottom surface of the recess 139a to accomplish the positioning. The positional relation between the photosensitive drum 107 and the frame of the process cartridge B, will be described. In the drawing which will be.referred to, the shaft coupling, process cartridge B and the cartridge mounting portion of the main assembly of the apparatus, are schematically shown. When the photosensitive drum 107 is moved toward the non-driving side, the axial movement of the photosensitive drum 107 is stopped by a stepped portion at the boundary of the expanded diameter portion 107a2 of the drum shaft 107a, in this embodiment. However, with such a positional relation, the projection 137a and the recess 139a are engaged, and the end surface of the projection 137a1 and the recess the bottom surface 139a1 are spaced apart. Therefore, the axial movement toward the non-driving side of the photosensitive drum 107 is determined in effect by the cleaning frame 12c, and therefore, the following description will be made as to the relation between the photosensitive drum 107 and the cleaning frame 12c.

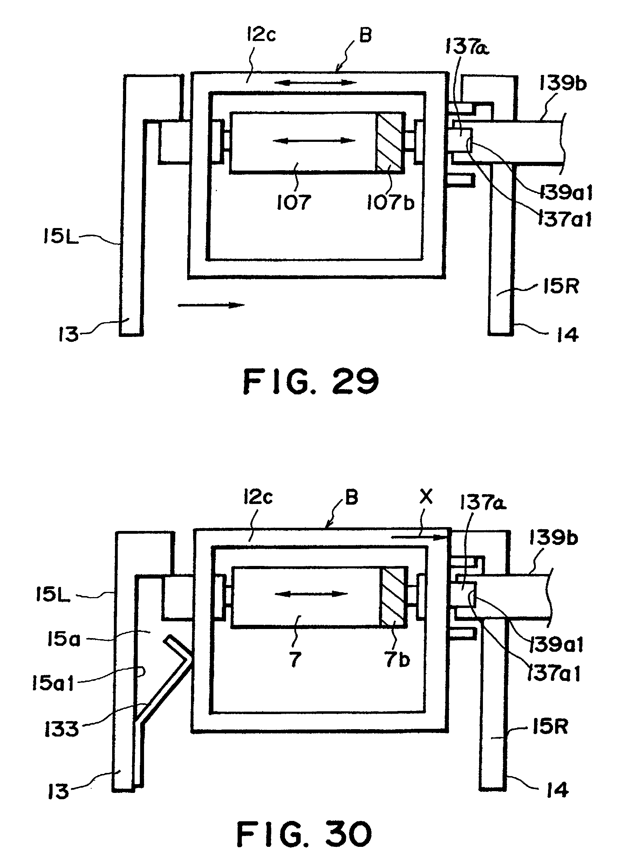

Figure 29 shows a case wherein the photosensitive drum 107 is movable in the longitudinal direction relative to the cleaning frame 12c (indicated by double headed arrow), and the cleaning frame 12c is movable in the longitudinal direction between the guiding members 15 (15L, 15R) (indicated by double headed arrow). In this case, when the shaft coupling is engaged, the male coupling shaft 137 is attracted toward the female coupling shaft 139b, so that end surface of the projection 137a1 is abutted to the bottom surface 139a1 of the recess, thus determining the axial position of the photosensitive drum 107. When the longitudinal position of the photosensitive drum 107 is determined, the cleaning frame 12c is urged in the direction opposite from the direction indicated by arrow d by the press-contact force between the drum shaft 107a and the grounding plate 107f, so that photosensitive drum side end 138b of the bearing 138 and the end 107b1 of the drum gear 107b are abutted, by which the position thereof is determined. Thus, the position of the process cartridge B relative to the mounting position of the main assembly in the longitudinal direction of the photosensitive drum 107, is determined.

Figure 30 shows a case wherein the photosensitive drum 107 is movable in the longitudinal 5 direction relative to the cleaning frame 12c, and the cleaning frame 12c is not movable in the longitudinal direction relative to the cartridge mounting portion of the main assembly of the apparatus by elastic force of the leaf spring 133 disposed between the cleaning frame 12c and the bottom 15a of the guide portion 15a. An arrow X indicates the contact portion between the guiding member 15R and the cleaning frame 12c. The same applies to the case wherein the leaf spring 133 is not used, but the cleaning frame 12c is snugly engaged between the guiding members 15, and therefore, the process cartridge B is not movable in the longitudinal direction relative to the main assembly of the apparatus. In these cases, when the shaft coupling is engaged, the male coupling shaft 137 is attracted toward the female shaft 139b, and the end surface 137a1 of the projection 137a is abutted to the bottom surface 139a1 of the recess so that axial position of the photosensitive drum 107 is determined. Namely, the position of the process cartridge B relative to the main assembly of the apparatus in the longitudinal direction of the photosensitive drum 107, is determined.

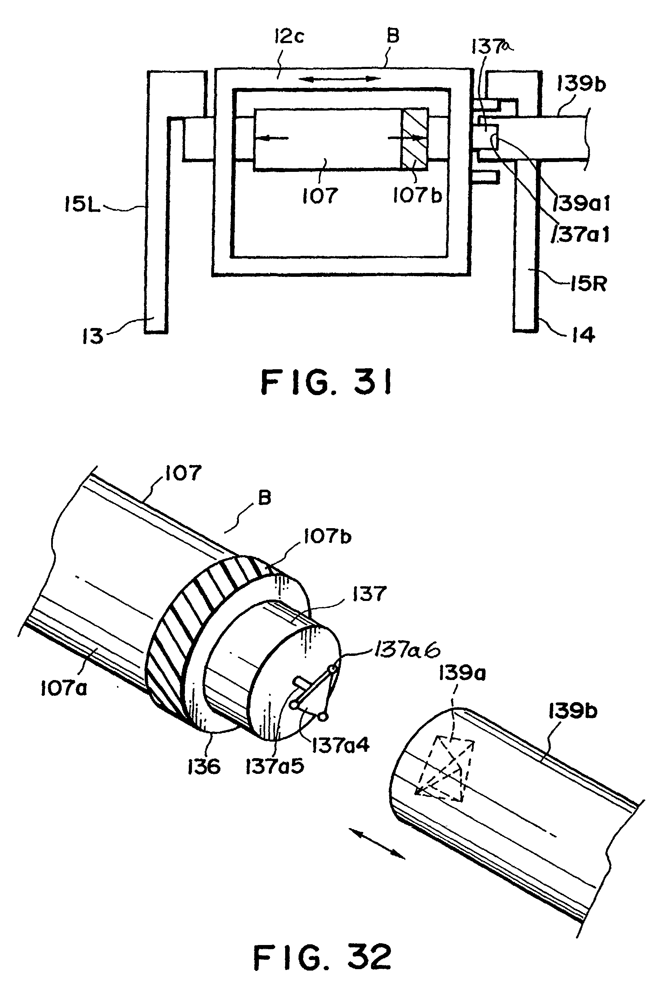

Figure 31 shows a case wherein the photosensitive drum 107 is not movable in the longitudinal direction relative to the cleaning frame 12c, but the cleaning frame 12c is movable in the longitudinal direction between the guiding members 15. In this case, when the shaft coupling is engaged, the male coupling shaft 137 is attracted toward the female coupling shaft 139b, and the end surface of the projection 137a1 is abutted to the bottom surface 139a1 of the recess, so that axial position of the photosensitive drum 107 is determined. Namely, the position of the process cartridge B relative to the main assembly 14 of the apparatus in the longitudinal direction of the photosensitive drum 7, is determined.

Thus, according to the embodiment, the precise positioning is accomplished in any cases (1-a), (1-b), (2-a), and (2-b).

In embodiment, by abutment between the backside of the outer cam 35 (Figure 16) and a side of the large gear 34, position of the female coupling shaft 39b in the direction indicated by the arrow P (Figure 28) is determined. By this, the position of the bottom surface 139a1 of the recess is determined. The end surface of the projection is attracted and press-contacted to the bottom surface 139a1 of the recess, since the projection 137a is in the form of a twisted column of substantially equilateral triangle, and correspondingly, the recess 139a is in the *form* of a twisted hole of substantially equilateral triangle. By this, the axial position of the photosensitive drum 107 is determined stably during driving operation. In other words, the position of the process cartridge B relative to the main assembly of the apparatus in the longitudinal direction, is stably determined.

Furthermore, since the twisting direction of the drum gear 7b is such that projection 37a is thrusted toward the recess 39a, the axial position of the photosensitive drum 7 is stabilized. Namely, the position of the process cartridge B relative to the main assembly of the apparatus in the longitudinal direction of photosensitive drum 7, is stably determined.

In this example, the projection 137a is provided on the drum flange 136, and the recess 139a is provided in the shaft 139b disposed at the center of the large gear 34 of the rotatable member. It is an usable alternative that recess 139a is provided in the drum flange 136, and a projection 137a is provided on the shaft 139b disposed at the center of the large gear 34.

In the foregoing description, the twisting direction of the recess 139a namely the hole(projection) is such as to twist toward the bottom of the hole from the inlet thereof in the opposite direction from the rotational direction of the gear.

The twisting amount of the hole(projection) is 1° - 15° in the rotational direction per axial length of 1mm.

In this embodiment, the depth of the hole is approx. 4 mm, and the twisting amount is approx. 30°.

In the embodiments, the projection 137a is in the form of a polygonal prism. Figure 32 shows an usable alternative wherein a supporting shaft 137a5 is provided at the center of the male shaft 137, and a non-twisted triangular plate 107a4 is mounted to the free end thereof, and is engaged by engagement portions 137a6 with the twisted triangular hole of the recess 139a.

Further Embodiment

In the first embodiment, the coupling of the photosensitive drum is constituted as a male shaft 17, and the coupling of the main assembly is constituted as a female shaft 18, but the female shaft and the male shaft may be exchanged. In such a case, the same advantageous effects in the rotation accuracy of the photosensitive drum can be provided (Figures 23 and 24). In this example, if the tolerable transmission torque of the female shaft of the photosensitive drum is smaller than the tolerable transmission torque of the male shaft of the main assembly, the damage of the male shaft of the main assembly can be prevented.

For example, the female coupling shaft provided in the cartridge is made of polyacetal (POM), and the male coupling shaft constituted in the main assembly is made of zinc die-cast. By doing so, even if an abnormal torque is produced, the damage of the male shaft is prevented since the tolerable transmission torque of the male coupling shaft of the main assembly side is large.

In the above-described embodiment, if a taper is formed at the end portion of the projection 17a or at the inlet portion of the recess 18a or at the both, combination between the projection 17a and the recess 18a is smoother.

In the foregoing, the process cartridge has been described as a cartridge for monochromatic image formation, but it is applicable to a cartridge for forming a multi-color image (two color, three color or full-color image, for example) if a plurality of developing means are used.

As for the developing method, any known methods such as a two-component magnetic brush developing method, a cascade developing method, a touch-down developing method, cloud developing method or the like.

As for the electrophotographic photosensitive member, usable ones include amorphous silicon, amorphous selenium, zinc oxide, titanium oxide, organic photoconductor (OPC) and the like. As for methods for mountings photosensitive material, a photoconductor is evaporated or painted or applied on a cylinder of aluminum alloy or the like.

As for the charging means, a so-called contact type charging method is used in the foregoing examples. However, another method such as corona charging is usable, in which a tungsten wire is enclosed by metal shield of aluminum or the like at three side of the wire, and positive or negative ions are produced by applying a high voltage to the tungsten wire, and the surface of the photosensitive drum is uniformly charged by moving positive or negative ions to the surface.

As for the charging means, blade type (charging blade), pad type, block type, rod type, wire type or the like is usable in addition to the roller type.

As for the cleaning means for removing residual toner from the photosensitive drum, fur brush, magnetic brush or the like is usable, as well as the cleaning blade.

The process cartridge may contain a photosensitive member and at least one of process means. The process cartridge may contain a photosensitive drum and charging means and is made detachably mountable to a main assembly of the apparatus. The process cartridge may contain a photosensitive drum and developing means and is made detachably mountable to a main assembly of the apparatus. The process cartridge may contain a photosensitive drum and cleaning means and is made detachably mountable to a main assembly of the apparatus. The process cartridge may contain a photosensitive drum and at least two process means.

The process cartridge may contain a photosensitive drum and charging means, developing means or cleaning means, and is made detachably mountable to a main assembly of the apparatus. The process cartridge may contain a photosensitive drum and at least one of charging means, developing means and cleaning means, and is made detachably mountable to a main assembly of the apparatus. The process cartridge may contain a photosensitive drum and at least developing means, and is made detachably mountable to a main assembly of the apparatus. Since the process cartridge is detachably mountable to the main assembly of the image forming apparatus by the user, and this means that the maintenance of the apparatus using the process cartridge can be performed by the user by exchanging the process cartridge.

The present invention is applicable to a non-cartridge type image forming apparatus wherein the photosensitive drum, the developing means or the like is directly mounted to the main assembly of the apparatus.

In the foregoing, the description has been made as to a laser beam printer as an exemplary image forming apparatus, but he present invention is applicable to an electrophotographic copying machine, facsimile machine, word processor or anther image forming machine.

As described in the foregoing, according to the present invention, the rotation accuracy of the driving transmission is improved, so the rotation accuracy of the electrophotographic photosensitive drum has been improved.

Additionally, the driving force can be assuredly transmitted from the main assembly to the electrophotographic photosensitive drum.

Furthermore, when the driving force is transmitted (during image forming operation), the rotation center of the coupling of the main assembly of the apparatus and the coupling of the electrophotographic photosensitive drum can be substantially aligned.

Further additionally, when the driving force is transmitted (during the image forming operation), the electrophotographic photosensitive drum is attracted toward the main assembly side, so that the positional accuracy of the photosensitive member and therefore the process cartridge relative to the main assembly is improved.

Further additionally, when the driving transmission is not carried out (when the image is not formed), the drive transmission coupled state is released, so that the operativity in demounting of the process cartridge is improved. Further additionally, the diameter of the diameter of the coupling portion is small.

While the invention has been described with reference to the structures disclosed herein, it is not confined to the details set forth and this application is intended to cover such modifications or changes as may come within the scope of the following claims.

**Claims**

1. A process cartridge (B) detachably mountable to a main assembly (13) of an image forming apparatus (A), wherein said main assembly (13) includes a motor, a driving rotatable member (18, 118a, 34) for receiving a driving force from said motor and a twisted recess (18a, 139a) formed substantially at a center of said rotatable member, said recess having a polygonal cross-section; said process cartridge comprising:

an electrophotographic photosensitive drum (7, 107); and
process means (8, 10, 11) actable on said photosensitive drum (7, 107);

**characterised by** the provision of:

a plurality of engageable portions (E, 137a6) engageable to an inner surface of said twisted recess (18a, 139a), said engageable portions being provided at and supported by a longitudinal end of said photosensitive drum, wherein when in use said driving rotatable member rotates with said recess (18a, 139a) and engageable portions (E, 137a6) engaged with each other, a rotational driving force is transmitted from said driving rotatable member (18, 118a, 34) to said photosensitive drum (7, 107) through said recess (18a, 139a) and said engageable portions (E, 137a6) with said engageable portions (E, 137a6) being pulled into said recess (18a, 139a) wherein free ends (17a1, 137a1) of said engageable portions (E, 137a6) and a bottom surface (139a1) of said recess (18a, 139a) abut each other so that said photosensitive drum is positioned in place in a longitudinal direction of said photosensitive drum (7, 107) relative to the main assembly (13).

2. A process cartridge according to claim 1, further **characterised in that** said engageable portions (E, E2) are provided at an outer surface of a projection (17a).

3. A process cartridge according to claim 1, further **characterised in that** said engageable portions (E, E2) are provided on one side of a drum flange (16, 107b) mounted to one end of a cylindrical member of said photosensitive drum.

4. A process cartridge according to claim 3, further **characterised in that** said drum flange includes a shaft portion (17) rotatably supported on a frame, a gear portion (16a) for transmitting rotational driving force to a developing roller and an engaging portion (16b) for engagement with said cylindrical member, wherein said engageable portions are supported by said shaft portion (17), so that said engageable portions are supported by said photosensitive drum.

5. A process cartridge according to claim 3, further **characterised in that** said drum flange (16) includes a shaft portion (17) rotatably supported on a frame (12c), a gear portion (16a) for transmitting rotational driving force to a developing roller and an engaging portion (16b) for engagement with said cylindrical member, wherein a projection (17a) is provided at an end of said shaft portion (17), and said engageable portions (E, E2) are provided at an outer surface of said projection (17a).

6. A process cartridge according to claim 2, 5, 88 further **characterised in that** said projection (17a) is in the form of a twisted prism.

7. A process cartridge according to claim 6, further **characterised in that** said prism has a substantially triangular cross-section.

8. A process cartridge according to claim 7, further **characterised in that** the triangular cross-section is an equilateral triangular cross-section.

9. An electrophotographic image forming apparatus (A) for forming an image on a recording material (2), comprising:

an electrophotographic photosensitive drum (7);
charging means (8) for charging said photosensitive drum;
developing means (10) for developing a latent image formed on said photosensitive drum into a toner image;
transfer means (4) for transferring the toner image onto the recording material;
fixing means (5) for fixing the toner image on the recording material;
a motor (30);
a main assembly side gear (34) for receiving driving force from said motor;
a twisted recess (18a) formed substantially at a center of said gear (34), said recess having a polygonal cross-section;
a projection (17a) provided at a longitudinal end of said photosensitive drum (7), wherein in use said main assembly side gear (34) rotates with said recess (18a) and projection (17a) engaged with each other, rotational driving force is transmitted from said gear (34) to said photosensitive drum (7) through said recess (18a) and said projection (17a) with said projection being pulled into said recess, **characterised in that** in use a free end (17a1) of said projection and a bottom surface (18a1) of said recess abut with each other so that said photosensitive drum (7) is positioned in place in a longitudinal direction of said photosensitive drum relative to the main assembly.

10. An apparatus according to claim 9, wherein said recess (18a) is formed in an end of a first column (18) projected from a rotational axis of said main assembly side gear (34), and said projection (17a) is projected from an end of a shaft (17) projected outwardly in the longitudinal direction from a rotational axis of said photosensitive drum (7).

11. An apparatus according to claim 9 or claim 10, wherein said projection (17a) is provided at a drum gear end of said photosensitive drum (7), and said drum gear (16a) functions to transmit the driving force to a developing roller (10d).

**12.** An apparatus according to claim 11, wherein said main assembly side gear (34) and drum gear (16a) are helical gears.

**13.** An apparatus according to any of claims 9 to 12 further comprising a circular or arcuate wall (24a) extending around said projection (17a), said wall being adapted to function as a guide for engagement between said recess (18a) and projection (17a).

**14.** An apparatus according to claim 10, wherein an outer diameter D1 of said photosensitive drum (7), an outer diameter F of said shaft (17) and a diameter C of a circumscribed circle of said projection (17a) satisfy:

$$D1 > F \geq C.$$

**15.** An apparatus according to claim 10, wherein an outer diameter F of said shaft (17), a diameter C of a circumscribed circle of said projection (17a), a dedendum diameter G of the gear of said photosensitive drum and an inner diameter D2 of said photosensitive drum, satisfy:

$$G > D2, \text{ and } G > F \geq C.$$

**16.** An apparatus according to any of claims 9 to 15, wherein an outer diameter D1 of said photosensitive drum (7) and dedendum diameter L of said main assembly side gear (34) satisfy the relation:

$$1.0 \times D1 \leq L \leq 5.0 \times D1.$$

**17.** An apparatus according to any of claims 9 to 16, wherein said main assembly side gear (34) has a module of approx. 0.4 - 0.7 and has a dedendum diameter L of approx. 30 - 150mm, and further has 40 to 400 teeth.

**18.** An apparatus according to any of claims 9 to 17, wherein said recess (18a) has a substantially triangular cross-section, and said projection (17a) has a substantially triangular cross-section, and wherein corners of the triangular cross-sectional shape are bevelled.

**19.** An apparatus according to any of claim 9 to 18, wherein said photosensitive drum (7) and at least one of said charging means (8) and said developing means (10) are contained in a process cartridge (B) which is detachably mountable to a main assembly of said image forming apparatus (A).

**20.** An apparatus according to claim 19, further comprising an openable cover (14) for permitting mounting and demounting of said process cartridge (B) relative to said main assembly, and moving means (35, 36, 37) for moving said recess (18a) away from said projection (17a) in interrelation with opening of said cover (14), and for moving said recess (18a) toward said projection (18a) in interrelation with closing of said cover (14).

**Patentansprüche**

**1.** Prozeßkartusche (B), die an einer Hauptbaugruppe (13) eines Bilderzeugungsgeräts (A) abnehmbar angeordnet werden kann, wobei die Hauptbaugruppe (13) einen Motor aufweist, ein Antriebsdrehelement (18, 118a, 34) zum Aufnehmen einer Antriebskraft von dem Motor und eine Drallvertiefung (18a, 139a), die im wesentlichen in einer Mitte des Drehelements ausgebildet ist, und die Vertiefung einen Vieleckquerschnitt hat, wobei die Prozeßkartusche aufweist:

- eine elektrophotographische, lichtempfindliche Trommel (7, 107) und
- eine Prozeßvorrichtung (8, 10, 11), die auf die lichtempfindliche Trommel (7, 107) einwirken kann,

**gekennzeichnet durch** die Anordnung:

einer Vielzahl von in Eingriff bringbaren Abschnitten (E, 137a6), die mit einer Innenfläche der Drallvertiefung (18a, 139a) in Eingriff bringbar sind, wobei die in Eingriff bringbaren Abschnitte an einem Längsende der lichtempfindlichen Trommel angeordnet sind und **durch** das Längsende getragen werden, wobei dann, wenn sich das drehbare Antriebselement im Einsatz mit der Vertiefung (18a, 139a) und den in Eingriff bringbaren Abschnitten (E, 137a6) dreht, die miteinander_in Eingriff sind, von dem drehbaren Antriebselement (18, 118a, 34) **durch** die Vertiefung (18a, 139a) und die in Eingriff bringbaren Abschnitte (E, 137a6) eine Drehantriebskraft auf die lichtempfindliche Trommel (7, 107) übertragen wird, wobei die in Eingriff bringbaren Abschnitte (E, 137a6) in die Vertiefung (18a, 139a) gezogen werden, wobei freie Enden (17a1, 137a1) der in Eingriff bringbaren Abschnitte (E, 137a6) und eine Bodenfläche (139a1) der Vertiefung (18a, 139a) so einander in Anlage gebracht werden, daß die lichtempfindliche Trommel in einer Position in einer Längsrichtung der lichtempfindlichen Trommel (7, 107) in bezug auf die Hauptbaugruppe (13) angeordnet wird.

**2.** Prozeßkartusche gemäß Anspruch 1, die ferner **dadurch gekennzeichnet ist, daß**:

die in Eingriff bringbaren Abschnitte (E, E2) an einer Außenfläche eines Vorsprungs (17a) angeordnet sind.

**3.** Prozeßkartusche gemäß Anspruch 1, die ferner **dadurch gekennzeichnet ist, daß**:

die in Eingriff bringbaren Abschnitte (E, E2) auf einer Seite eines Trommelflanschs (16, 107b) vorgesehen sind, der an einem Ende eines zylindrischen Elements der lichtempfindlichen Trommel angeordnet ist.

**4.** Prozeßkartusche gemäß Anspruch 3, die ferner **dadurch gekennzeichnet ist, daß**:

der Trommelflansch einen Wellenabschnitt (17) aufweist, der in einem Rahmen drehbar gelagert ist, einen Zahnradabschnitt (16a) zum Übertragen einer Drehantriebskraft auf eine Entwicklungswalze und einen Eingriffabschnitt (16b) zum Eingriff mit dem zylindrischen Element, wobei die in Eingriff bringbaren Abschnitte durch den Wellenabschnitt (17) so getragen werden, daß die in Eingriff bringbaren Abschnitte durch die lichtempfindliche Trommel getragen werden.

**5.** Prozeßkartusche gemäß Anspruch 3, die ferner **dadurch gekennzeichnet ist, daß**:

der Trommelflansch (16) einen Wellenabschnitt (17) aufweist, der in einem Rahmen (12c) drehbar gelagert ist, einen Zahnradabschnitt (16a) zum Übertragen einer Drehtriebskraft auf eine Entwicklungswalze und einen Eingriffabschnitt (16b) zum Eingriff mit dem zylindrischen Element, wobei ein Vorsprung (17a) an einem Ende des Wellenabschnitts (17) angeordnet ist und die in Eingriff bringbaren Abschnitte (E, E2) an einer Außenfläche des Vorsprungs (17a) angeordnet sind.

**6.** Prozeßkartusche gemäß Anspruch 2 und Anspruch 5, ferner **dadurch gekennzeichnet, daß**:

der Vorsprung (17a) in der Form eines Drallprismas ist.

**7.** Prozeßkartusche gemäß Anspruch 6, ferner **dadurch gekennzeichnet, daß**:

das Prisma einen im wesentlichen dreieckigen Querschnitt aufweist.

**8.** Prozeßkartusche gemäß Anspruch 7, ferner **dadurch gekennzeichnet, daß**:

der dreieckige Querschnitt der Querschnitt eines gleichseitigen Dreiecks ist.

**9.** Elektrophotographisches Bilderzeugungsgerät (A) zum Erzeugen eines Bilds auf einem Aufzeichnungsmaterial (2), das aufweist:

- eine elektrophotographische, lichtempfindliche Trommel (7),
- eine Aufladevorrichtung (8) zum Aufladen der lichtempfindlichen Trommel,
- eine Entwicklungsvorrichtung (10) zum Entwikkeln eines latenten Bilds, das auf der lichtempfindlichen Trommel erzeugt ist, zu einem Tonerbild,
- eine Transfervorrichtung (4) zum Übertragen des Tonerbilds auf das Aufzeichnungsmaterial,
- eine Fixiervorrichtung (5) zum Fixieren des Tonerbilds auf dem Aufzeichnungsmaterial,
- einen Motor (30),
- ein Hauptbaugruppenseiten-Zahnrad (34) zum Aufnehmen der Antriebskraft von dem Motor,
- eine Drallvertiefung (18a), die im wesentlichen in einer Mitte des Zahnrads (34) erzeugt ist, wobei die Vertiefung einen Vieleckquerschnitt aufweist,
- einen Vorsprung (17a), der an einem Längsende der lichtempfindlichen Trommel (7) angeordnet ist, wobei bei Verwendung sich das Hauptbaugruppenseiten-Zahnrad (34) mit der Vertiefung (18a) und dem Vorsprung (17a) dreht, die miteinander im Eingriff sind, wobei die Drehantriebskraft von dem Zahnrad (34) durch die Vertiefung (18a) und den Vorsprung (17a) auf die lichtempfindliche Trommel (7) übertragen wird, wobei der Vorsprung in die Vertiefung gezogen wird,

**dadurch gekennzeichnet, daß**:

bei Verwendung ein freies Ende (17a1) des Vorsprungs und eine Bodenfläche (18a1) der Vertiefung einander so in Anlage sind, daß die lichtempfindliche Trommel (7) in einer Position in einer Längsrichtung der lichtempfindlichen Trommel in bezug auf die Hauptbaugruppe angeordnet wird.

**10.** Gerät gemäß Anspruch 9, wobei die Vertiefung (18a) an einem Ende einer ersten Säule (18) erzeugt ist, die von einer Drehachse des Hauptbaugruppenseiten-Zahnrads (34) vorsteht, und der Vorsprung (17a) von einem Ende einer Welle (17) vorsteht, die von einer Drehachse der lichtempfindlichen Trommel in der Längsrichtung nach außen

vorsteht.

11. Gerät gemäß Anspruch 9 oder Anspruch 10, wobei der Vorsprung (17a) an einem Trommelzahnradende der lichtempfindlichen Trommel (7) angeordnet ist und das Trommelzahnrad (16a) funktionswirksam ist, um die Antriebskraft auf eine Entwicklungswalze (10d) zu übertragen.

12. Gerät gemäß Anspruch 11, wobei das Hauptbaugruppenseiten-Zahnrad (34) und das Trommelzahnrad (16a) Schrägzahnräder sind.

13. Gerät gemäß einem der Ansprüche 9 bis 12, das ferner eine runde oder bogenförmige Wand (24a) aufweist, die sich um den Vorsprung (17a) erstreckt, wobei die Wand angepaßt ist, als eine Führung zum Eingriff zwischen der Vertiefung (18a) und dem Vorsprung (17a) wirksam zu sein.

14. Gerät gemäß Anspruch 10, wobei ein Außendurchmesser D1 der lichtempfindlichen Trommel (7), ein Außendurchmesser F der Welle (17) und ein Durchmesser C eines Umkreises des Vorsprungs (17a) die Beziehung erfüllen:

$$D1 > F \geq C.$$

15. Gerät gemäß Anspruch 10, wobei ein Außendurchmesser F der Welle (17), ein Durchmesser C eines Umkreises des Vorsprungs (17a), ein Fußkreisdurchmesser G des Zahnrads der lichtempfindlichen Trommel und ein Innendurchmesser D2 der lichtempfindlichen Trommel die Beziehungen erfüllen:

$$G > D2 \text{ und } G > F \geq C.$$

16. Gerät gemäß einem der Ansprüche 9 bis 15, wobei ein Außendurchmesser D1 der lichtempfindlichen Trommel (7) und ein Fußkreisdurchmesser L des Hauptbaugruppenseiten-Zahnrads (34) die Beziehung erfüllen:

$$1{,}0 \times D \leq L \leq 5{,}0 \times D1.$$

17. Gerät gemäß einem der Ansprüche 9 bis 16, wobei das Hauptbaugruppenseiten-Zahnrad (34) ein Modul von etwa 0,4 - 0,7 und einen Fußkreisdurchmesser L von etwa 30 - 150 mm aufweist und ferner 40 bis 400 Zähne hat.

18. Gerät gemäß einem der Ansprüche 9 bis 17, wobei die Vertiefung (18a) einen im wesentlichen dreieckigen Querschnitt aufweist und der Vorsprung (17a) einem im wesentlichen dreieckförmigen Querschnitt aufweist, und wobei die Ekken des dreieckförmigen Querschnitts geschrägt sind.

19. Gerät gemäß einem der Ansprüche 9 bis 18, wobei die lichtempfindliche Trommel (7) und mindestens eine der Vorrichtungen, die Aufladevorrichtung (8) und die Entwicklungsvorrichtung (10), in einer Prozeßkartusche (B) enthalten sind, welche an einer Hauptbaugruppe des Bilderzeugungsgeräts (A) abnehmbar angeordnet werden kann.

20. Gerät gemäß Anspruch 19, das ferner eine in Offenlage bringbare Abdeckung (14) aufweist, um die Montage und die Demontage der Prozeßkartusche (B) in bezug auf die Hauptbaugruppe zu ermöglichen, und die Bewegungsvorrichtung (35, 36, 37) zum Bewegen der Vertiefung (18a) von dem Vorsprung (17a) weg in Wechselbeziehung mit dem Öffnen der Abdeckung (14) und zum Bewegen der Vertiefung (18a) zu dem Vorsprung (17a) in Wechselbeziehung mit dem Schließen der Abdeckung (14).

**Revendications**

1. Cartouche de traitement (B) pouvant être montée de façon amovible sur un ensemble principal (13) d'un appareil (A) de formation d'images, dans lequel ledit ensemble principal (13) comprend un moteur, un élément rotatif (18, 118a, 34) d'entraînement destiné à recevoir dudit moteur une force d'entraînement et un évidement torsadé (18a, 139a) formé sensiblement au centre dudit élément rotatif, ledit évidement ayant une section transversale polygonale, ladite cartouche de traitement comportant :

   un élément photosensible électrophotographique (7, 107) ; et
   des moyens de traitement (8, 10, 11) pouvant agir sur ledit tambour photosensible (7, 107) ;

   **caractérisée par** la présence de

   une pluralité de parties pouvant être engagées (E, 137a6) avec une surface intérieure dudit évidement torsadé (18a, 139a), lesdites parties pouvant être engagées étant prévues à, et supportées par, une extrémité longitudinale dudit tambour photosensible, de manière que, lorsqu'au moment de l'utilisation, ledit élément rotatif d'entraînement tourne alors que ledit évidement (18a, 139a) et lesdites parties pouvant être engagées (E, 137a6) sont engagés entre eux, une force d'entraînement en rotation soit transmise dudit élément rotatif d'entraînement (18, 118a, 34) audit tambour photosensible (7, 107) par l'intermédiaire dudit évidement (18a, 139a) et desdites parties pouvant être engagées (E, 137a6) en même temps que lesdites parties pouvant être engagées (E, 137a6) sont tirées vers l'intérieur dudit évidement (18a, 139a), des extrémités libres (17a1, 137a1) desdites parties pouvant être engagées (E, 137a6) et une surface de fond (139a1) dudit évidement (18a, 139a) étant en appui entre elles afin que ledit tambour photosensible soit positionné en place dans une direction longitudinale dudit tambour photosensible (7,107) par rapport à l'ensemble principal (13).

**2.** Cartouche de traitement selon la revendication 1, **caractérisée en outre en ce que** lesdites parties pouvant être engagées (E, E2) sont prévues à une surface extérieure d'une saillie (17a).

**3.** Cartouche de traitement selon la revendication 1, **caractérisée en outre en ce que** lesdites parties pouvant être engagées (E, E2) sont prévues sur un côté d'une collerette (16, 107b) du tambour montée sur une extrémité d'un élément cylindrique dudit tambour photosensible.

**4.** Cartouche de traitement selon la revendication 3, **caractérisée en outre en ce que** ladite collerette du tambour comprend une partie d'arbre (17) supportée de façon à pouvoir tourner sur un bâti, une partie dentée (16a) destinée à transmettre une force d'entraînement en rotation à un rouleau de développement et une partie d'engagement (16b) destinée à réaliser un engagement avec ledit élément cylindrique, dans laquelle lesdites parties pouvant être engagées sont supportées par ladite partie d'arbre (17), afin que lesdites parties pouvant être engagées soient supportées par ledit tambour photosensible.

**5.** Cartouche de traitement selon la revendication 3, **caractérisée en outre en ce que** ladite collerette (16) du tambour comprend une partie d'arbre (17) supportée de façon à pouvoir tourner sur un bâti (12c), une partie dentée (16a) destinée à transmettre une force d'entraînement en rotation à un rouleau de développement et une partie d'engagement (16b) destinée à réaliser un engagement avec ledit élément cylindrique, dans laquelle une saillie (17a) est prévue à une de ladite partie d'arbre (17), et lesdites parties (E, E2) pouvant être engagées sont situées à une surface extérieure de ladite saillie (17a).

**6.** Cartouche de traitement selon la revendication 2 ou 5, **caractérisée en outre en ce que** ladite saillie (17a) se présente sous la forme d'un prisme torsadé.

**7.** Cartouche de traitement selon la revendication 6, **caractérisée en outre en ce que** ledit prisme a une section transversale sensiblement triangulaire.

**8.** Cartouche de traitement selon la revendication 7, **caractérisée en outre en ce que** la section transversale triangulaire est une section transversale en triangle équilatéral.

**9.** Appareil électrophotographique (A) de formation d'images destiné à former une image sur un support d'enregistrement (2), comportant :

un tambour photosensible électrophotographique (7) ;
un moyen de charge (8) destiné à charger ledit tambour photosensible ;
un moyen de développement (10) destiné à développer en une image en toner une image latente formée sur ledit tambour photosensible ;
un moyen de report (4) destiné à reporter l'image en toner sur le support d'enregistrement ;
un moyen de fixage (5) destiné à fixer l'image en toner sur le support d'enregistrement ;
un moteur (30) ;
une roue dentée (34) du côté de l'ensemble principal destinée à recevoir dudit moteur une force d'entraînement ;
un évidement torsadé (18a) formé sensiblement au centre de ladite roue dentée (34), ledit évidement ayant une section transversale polygonale ;
une saillie (17a) prévue à une extrémité longitudinale dudit tambour photosensible (7), dans lequel, lors de l'utilisation, ladite roue dentée (34) du côté de l'ensemble principal tourne alors que ledit évidement (18a) et ladite saillie (17a) sont engagés l'un avec l'autre, une force d'entraînement en rotation est transmise de ladite roue dentée (34) audit tambour photosensible (7) par l'intermédiaire dudit évidement (18a) et de ladite saillie (17a), ladite saillie étant tirée vers l'intérieur dudit évidement, **caractérisé en ce que**, lors de l'utilisation, une extrémité libre (17a1) de ladite saillie et une surface de fond (18a1) dudit évidement sont en appui l'une contre l'autre afin que ledit tambour photosensible (7) soit positionné en place dans une direction longitudinale dudit tambour photosensible par rapport à l'ensemble principal.

**10.** Appareil selon la revendication 9, dans lequel ledit évidement (18a) est formé dans une extrémité d'une première colonne (18) faisant saillie d'un axe de rotation de ladite roue dentée (34) du côté de l'ensemble principal, et ladite saillie (17a) fait saillie d'une extrémité d'un arbre (17) faisant saillie vers l'extérieur dans la direction longitudinale depuis un axe de rotation dudit tambour photosensible (7).

**11.** Appareil selon la revendication 9 ou la revendication 10, dans lequel ladite saillie (17a) est située à une extrémité à roue dentée dudit tambour photosensible (7), et ladite roue dentée (16a) du tambour fonctionne de façon à transmettre la force d'entraînement à un rouleau de développement (10d).

**12.** Appareil selon la revendication 11, dans lequel ladite roue dentée (34) du côté de l'ensemble principal et ladite roue dentée (16a) du tambour sont des roues à denture hélicoïdale.

**13.** Appareil selon l'une quelconque des revendications 9 à 12, comportant en outre une paroi circulaire ou incurvée (24a) s'étendant autour de ladite saillie (17a), ladite paroi étant conçue pour fonctionner à la manière d'un guide pour un engagement entre ledit évidement (18a) et ladite saillie (17a).

**14.** Appareil selon la revendication 10, dans lequel le diamètre extérieur D1 dudit tambour photosensible (7), le diamètre extérieur F dudit arbre (17) et le diamètre C d'un cercle circonscript à ladite saillie (17a) satisfont à :

$$D1 > F \geq C.$$

**15.** Appareil selon la revendication 10, dans lequel le diamètre extérieur F dudit arbre (17), le diamètre C du cercle circonscript à ladite saillie (17a), le diamètre G du pied de dents de la roue dentée dudit tambour photosensible et le diamètre intérieur D2 dudit tambour photosensible satisfont à :

$$G > D2 \text{ et } G > F \geq C.$$

**16.** Appareil selon l'une quelconque des revendications 9 à 15, dans lequel le diamètre extérieur D1 dudit tambour photosensible (7) et le diamètre L de pied de dents de ladite roue dentée (34) du côté de l'ensemble principal satisfont à la relation :

$$1{,}0 \times D1 \leq L \leq 5{,}0 \times D1.$$

**17.** Appareil selon l'une quelconque des revendications 9 à 16, dans lequel ladite roue dentée (34) du côté de l'ensemble principal a un module d'environ 0,4 à 0,7 et un diamètre L de pied de dents d'environ 30 à 150 mm, et comporte en outre 40 à 400 dents.

**18.** Appareil selon l'une quelconque des revendications 9 à 17, dans lequel ledit évidement (18a) a une section transversale sensiblement triangulaire, et ladite saillie (17a) a une section transversale sensiblement triangulaire, et dans lequel les angles de la forme triangulaire de la section transversale sont biseautés.

**19.** Appareil selon l'une quelconque des revendications 9 à 18, dans lequel ledit tambour photosensible (7) et au moins l'un dudit moyen de charge (8) et dudit moyen de développement (10) sont contenus dans une cartouche de traitement (B) qui peut être montée de façon amovible sur un ensemble principal dudit appareil (A) de formation d'images.

**20.** Appareil selon la revendication 19, comportant en outre un capot ouvrant (14) pour permettre le montage et le démontage de ladite cartouche de traitement (B) par rapport audit ensemble principal, et des moyens de déplacement (35, 36, 37) destinés à éloigner ledit évidement (18a) de ladite saillie (17a) en association avec une ouverture dudit capot (14), et à rapprocher ledit évidement (18a) de ladite saillie (17a) en association avec la fermeture dudit capot (14).

FIG. I

# FIG. 2

12c1

B

12c3

12c

9

12c3

12c1

24

12a1

24a

12a

24c

17a

# FIG. 3

12c

B

12c1

12c3

12a1

25a

12a

12c2

12c3

# FIG. 4

— not applicable

EP 0 797 125 B1

FIG. 5

28

# FIG. 6

FIG. 7

FIG. 8

FIG. 9

FIG. 10

# FIG. II

FIG. 12

FIG. 13

FIG. 14

FIG. 15

FIG. 16

FIG. 17

EP 0 797 125 B1

FIG. 18

FIG. 19

FIG. 20

**FIG. 21**

EP 0 797 125 B1

**FIG. 22**

(a)

(b)

**FIG. 23**

FIG. 24

FIG. 25

(a)

A

14

3h

6

14a

34

3g

18a

5

140a

140

13

(b)

140a

140

34

141

18a

18

FIG. 26

( a )

( b )

# FIG. 27

**FIG. 28**

EP 0 797 125 B1

FIG. 29

FIG. 30

EP 0 797 125 B1

FIG. 31

FIG. 32